(19) Europäisches Patentamt
European Patent Office
Office européen des brevets

(11) Veröffentlichungsnummer: **0 001 856**
**B1**

(12) **EUROPÄISCHE PATENTSCHRIFT**

(45) Veröffentlichungstag der Patentschrift: **25.08.82**

(51) Int. Cl.³: **C 10 J 3/06**, C 10 J 3/14, C 10 J 3/66, C 01 B 3/02

(21) Anmeldenummer: **78200263.8**

(22) Anmeldetag: **27.10.78**

(54) **Verfahren und Vorrichtung zur kontinuierlichen Erzeugung von Generator- und Wassergas.**

(30) Priorität: **31.10.77 CH 13205/77**

(43) Veröffentlichungstag der Anmeldung:
**16.05.79 Patentblatt 79/10**

(45) Bekanntmachung des Hinweises auf die Patenterteilung:
**25.08.82 Patentblatt 82/34**

(84) Benannte Vertragsstaaten:
**CH DE FR GB NL SE**

(56) Entgegenhaltungen:
**DE - C - 422 999**
**DE - C - 713 209**
**FR - A - 600 472**
**FR - A - 823 858**
**FR - A - 911 458**

(73) Patentinhaber: **PPS Polyvalent Patent Service AG**
**Fohrhölzlistrasse 17**
**CH-5443 Niederrohrdorf (CH)**

(72) Erfinder:
**Der Erfinder hat auf seine Nennung verzichtet**

**EP 0 001 856 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren und Vorrichtung zur kontinuierlichen Erzeugung von Generator- und Wassergas

Zur Erzeugung von Generator- und Wassergas werden die verschiedensten Arbeits- und Herstellungsmethoden herangezogen. Auf dem Gebiet der stationären industriellen Anlagen sind zahlreiche Verfahren bekannt: Möller, Bubiag-Didier, Schmalfeldt-Wintershall, Koppers, Pintsch-Hillebrand, Winkler, Lurgi (siehe B. Riediger, Brennstoffe, Kraftstoffe, Schmierstoffe, Berlin 1949, S. 372—379). Ein derartiges Verfahren für industrielle Grossanlagen und Leuchtgasversorgung (DE-PS 422 999) zur kontinuierlichen Erzeugung von Wassergas aus wasserhaltigen Brennstoffen wendet das Prinzip der aufsteigenden Vergasung an. Es sieht ein Umlaufgas als Wärmeträger vor, welches nach dem Austritt aus der Beschikkungssäule einem Wärmeaustauscher durch Wärmeabgabe für eine Dampferzeugung oder Schwelung auf eine zur Förderung mit Ventilatoren geeignete Temperatur abgekühlt wird. Bei der Vergasungausfallendes Teer wird in bekannter Weise mechanisch entfernt und als Urteer anderweitig verwendet.

Eine konstruktive Ausgestaltung in einem weiteren Verfahren zur kontinuierlichen Wassergaserzeugung (DE—C—713 209) dient der Vermiedung eines Durchbrennens metallischer Trennwände an Wärmeübergangsstellen im Ofenraum. Hierzu wird ein Schutzgasschleier an der Sohle des Ofens ins Innere einer Heizkammer eingeblasen und über Durchlässe an der Heizkammerummantelung abgesaugt. Aufgrund der vorgesehenen direkten Wärmeübertragung, ohne gasförmige Mittel, wirkt sich dabei die geringe Wärmeleitfähigkeit der Beschickungssäule nachteilig aus, so dass dieses Verfahren nur auf relativ kleine Leistungen anwendbar ist.

Bei mobilen Gaserzeugern wird im allgemeinen das vom Fahrzeugbetrieb her bekannte Sauggasverfahren angewendet (siehe E. Baentsch, Dieselmotoren-Praxis, Berlin 1951, S. 171—175). Bei letzterem ist für teerfreie Brennstoffe die aufsteigende, bei teerhaltigen die absteigende Vergasungsmethode üblich. Sowohl Generator- wie Wassergasverfahren und die entsprechenden Erzeugeranlagen sind für die verschiedensten Brennstoffe wie Holz, Torf, Braunkohle, Steinkohle, Holzkohle und Koks entwickelt worden. Industrielle Anlagen arbeiten entweder diskontinuierlich unter Verwendung von atmosphärischer Verbrennungsluft oder kontinuierlich unter Verwendung von technisch reinem Sauerstoff. Dabei wird oft von der direkten Druckgaserzeugung Gebrauch gemacht. Mobile Sauggasanlagen für Fahrzeuge liefern in der Regel ein Schwachgas, welches mit einem gewissen Unterdruck in den Zylinder der Verbrennungskraftmaschine gelangt.

Die Verfahren der industriellen ortsfesten Generator- und Wassergaserzeugung erfordern im Falle des diskontinuierlichen Betriebes umständliche und aufwendige Umstellmechanismen, da mehrere Generatoreinheiten zusammengeschaltet werden müssen. Im Falle des kontinuierlichen Betriebes sind voluminöse Wärmespeicher (Regeneratoren), sehr träge, eine lange Anheizzeit benötigende Kammern (Retorten) oder die ständige Bereitstellung genügender Menge an technischem Sauerstoff inklusive dessen Erzeugungsanlage erforderlich. Um die Gasproduktion den veränderlichen Verhältnissen anpassen zu können, müssen überdies beträchtliche Speichermöglichkeiten vorgesehen werden. Praktisch alle bekannten, im grosstechnischen Masstab angewendeten Verfahren sind daher für einen elastischen unabhängigen Betrieb eines individuellen, starken Lastschwankungen unterworfenen Verbrauchers ungeeignet. Andererseits liefern die bekannten marktgängigen nach dem Sauggasverfahren arbeitenden Fahrzeug-Gasgeneratoren nur eine für viele Zwecke ungenügendes Schwachgas niederen Heizwertes. In allen Fällen muss ein beträchtlicher Leistungsabfall bei motorischem Betrieb in Kauf genommen werden, wobei sich sowohl Gasmenge wie -Qualität den stark wechselnden Erfordernissen nur schlecht anpasst. Zudem sind die nach diesem Verfahren arbeitenden Geräte nicht unabhängig von einer Saugvorrichtung (Kolbenmaschine) und können nicht autonom betrieben werden. Sie lassen sich daher als Gaserzeuger für gewerbliche und Haushaltungszwecke nicht verwenden. (Siehe: E. Baentsch, Dieselmotoren-Praxis, Berlin 1951, S. 175—177; E. Wawrziniok, Fahrzeugmotorenbetrieb mit karburiertem Holzkohlen-Generatorgas, Automobiltechnische Zeitschrift 1933, Heft 21, S. 546—549; H. Voelkel und W. Malchedeck, Untersuchung der Elastizität eines Holzgaserzeugers bei plötzlichen Belastungsänderungen, Automobiltechnische Zeitschrift 1936, Heft 11, S. 285—287). Nach vorstehend Gesagtem besteht ein ausgesprochenes Bedürfnis nach einem Verfahren zur besseren Nutzung des dem primären Brennstoff innewohnenden Heizwertes, nach flexiblerer Anpassung an den wechselhaften Betrieb des Verbrauchers und nach Fortfall schwerer und voluminöser Zusatzeinrichtungen. Im Zeitalter zunehmender Heranziehung fester Brennstoffe zur Energieversorgung ist der Wunsch vorhanden, die zwischen grosstechnischen Verfahren und dem Fahrzeugebetrieb klaffende Lücke auf dem Gebiet der Entgasung und Vergasung von Brennstoffen zu schliessen.

Der der Erfindung zugrunde liegende massgebende Leitgedanke besteht darin, eine grundsätzliche Aufgabentrennung derart vorzunehmen, dass ein Teil des Ausgangsmaterials den Grundstoff zur Umwandlung in die Gasphase liefert, während der andere Teil als reiner Brennstoff zur Deckung des Wärmebedarfs der Umwandlung des ersten Teils herangezogen wird. Durch diese Aufspaltung in zwei voneinander völlig getrennte Brennstoff-Flüsse wird die ursprünglich komplexe Aufgabe in zwei Teilprobleme, nämlich Trocknung, Erwärmung, Entgasung (Destillation) und Vergasung einerseits und Feuerung, Heizung und Wärmeübergang andererseits zerlegt. Diese methode ermöglicht eine optimale Lösung der Einzelaufgaben. Das Ergebnis ist ein Verfahren und eine Einrichtung, die die meisten festen Brennstoffe wirtschaftlich zu verarbeiten gestattet, keine aufwendigen voluminösen Wärmespeicher benötigt, von einer permanenten Sauerstoffquelle weitgehend unabhängig ist, einen kontinuierlichen Betrieb garantiert und ein praktisch stickstoffreies Starkgas liefert.

Dabei ist es als besonders vorteilhaft anzusehen, dass bei geeigneter Verfahrensührung die Vorrichtung ohne besondere Massnahmen wie Verdichter etc. ein hochwertiges Gas under Druck anzuliefern imstande ist.

Mit einer solchen Apparatur lassen sich zudem zahlreiche chemische Reaktionen und zusätzliche Prozesse durchführen, so dass sie eine vielseitigere Verwendung finden dürfte, als ihrer ursprünglichen Zielsetzung entspricht. Verfahren und Vorrichtung tragen daher den Keim zukünftiger Weiterentwicklung bereits in sich.

Durch das erfindungsgemässe Verfahren wurden Arbeitsmethoden geschaffen, welche die kontinuierliche Erzeugung eines hochwertigen gasförmigen Brennstoffes konstanter oder in gewissen Grenzen absichtlich gezielter variabler Zusammensetzung und hohen Heizwertes selbst aus minderwertigen Ausgangsmaterialien gestattet. Die erzeugte Gasmenge und Qualität kann selbst stark wechselnder Bedingungen des Verbrauchers fast trägheitslos angepasst werden, so dass selbst den höchsten Ansprüchen Genüge geleistet werden kann. Im Gegensatz zu den herkömmlichen diskontinuierlichen oder halbkontinuierlichen Verfahren werden keine aufwendigen Apparaturen, Umstellmechanismen, noch voluminöse Wärmespeicher (Rekuperatoren) oder grosse Mengen an Sauerstoff benötigt. Letzterer kann zwar wahlweise zu Hilfe genommen werden, jedoch arbeitet das Verfahren im Normalbetrieb ohne Sauerstoff. Das erzeugte Gas hat bei Vergasung von festen Brennstoffen, welche wenig flüchtige Bestandteile enthalten, ein Wasserstoff/Kohlenmonoxyd-Verhältnis von nahezu 1:1 und ist praktisch stickstoffrei, was beides für die Weiterverwendung von Vorteil ist. Das Gas fällt automatisch unter Druck an, so dass das Verfahren zum Betrieb von Druckgasgeneratoren bestens geeignet ist.

Durch die erfindungsgemässe Vorrichtung zur Erzeugung von Generator- und Wassergas wurde ein Gerät geschaffen, das die Durchführung aller in diesem Zusammenhang erdenklicken Herstellungsverfahren und Betriebsweisen bei der Entgasung und Vergasung von Brennstoffen ermöglicht. Insbesondere werden die im Ausgangsmaterial enthaltene Feuchtigkeit und die Teerbestandteile restlos zur Gaserzeugung ausgenutzt, wobei auch Karburierungs- und Krackprozesse mit Zusatzbrennstoffen durchgeführt werden können. Seine ideale Anpassungsfähigkeit selbst an plötzliche Lastwechsel prädestiniert das Gerät als Gaslieferant für motorische Zwecke bei der Umstellung von flüssigen auf feste Brennstoffe. Es ist deshalb insbesondere zum Antrieb von Fahrzeugen mit Verbrennungskraftmaschinen geeignet. Es vermeidet nicht nur die beim bisherigen konventionellen Sauggasbetrieb beobachteten Nachteile wie Leistungsabfall und schlechtes Beschleunigungsvermögen des Motors sowie Trägheit des Gasgenerators, sondern ermöglicht im Gegenteil dank besserer Gas-/Luft-Gemischbildung höheren Wirkungsgrad, dank höherem Druck bessere Zylinderfüllung und dank hoher Klopffestigkeit des Gases höher gezüchtete Motoren. Dies gestattet den Übergang zu festen Brennstoffen ohne aufwendige Umbauarbeiten wie Erhöhung des Verdichtungsverhältnisses und ohne Zusatzgeräte wie Kompressoren, Abgasturbolader etc. Da das Gerät autonom ist, eignet es sich auch vorzüglich zur Gasversorgung von Haushaltungen, Gewerbebetrieben, abgelegegen Siedlungen, Notstandsgebieten etc.

Weitere Einzelheiten des erfindungsgemässen Verfahrens, der Vorrichtung sowie dessen Anwendung ergeben sich aus der durch Figuren belegten Beschreibung und aus den näher erläuterten Ausführungsbeispielen.

Es zeigen:

Fig. 1 Ein allgemeines Fliesschaubild der Brennstoff-Flüsse und der Gasströme und -Kreisläufe,

Fig. 2 Ein Fliessbild für aufsteigende Vergasung,

Fig. 3 Ein Fliessbild für absteigende Vergasung,

Fig. 4 Ein Fliessbild für kombinierten Kreislauf,

Fig. 5 Ein Fliessbild für absteigende Vergasung mit hoher Glühzone,

Fig. 6 Ein Fliessbild für Gleich- und Gegenstrom-Wärmeübertragung,

Fig. 7 Ein Fliessbild für getrennte Kreisläufe,

Fig. 8 Ein Fliessbild für ineinander geschachtelte Kreisläufe,

Fig. 9 Einen schematischen Längsschnitt durch eine Vorrichtung zur Gaserzeugung,

Fig. 10 Das Baukastenprinzip des Aufbaus der Vorrichtung

Fig. 11 dito

Fig. 12 Einen Längsschnitt durch eine Ausführungsform der Vorrichtung

Fig. 13 Einen Querschnitt durch eine Ausführungsform der Vorrichtung

Fig. 14 Einen Längsschnitt durch einen einseitigen mit dem Gefäss verbundenen Wärmeaustauscher,

Fig. 15 Einen Längsschnitt durch einen beidseitigen Warmeaustauscher,

Fig. 16 Einen Längsschnitt durch einen einfachen Rauchgaswärmeaustauscher,

Fig. 17 Einen Längsschnitt durch einen mit dem Gefäss verbundenen Rauchgaswärmeaustauscher,

Fig. 18 Einen Längsschnitt durch einen wendelförmigen Rauchgaswärmeaustauscher

Fig. 19 Einen Längsschnitt durch einen aus zwei koaxialen Wendeln bestehenden Rauchgaswärmeaustauscher,

Fig. 20 Einen Längsschnitt durch eine unter erhöhtem Innendruck stehende Vorrichgung,

Fig. 21 Einen Querschnitt durch eine unter erhöhtem Innendruck stehende Vorrichtung.

Fig. 22 Einen Querschnitt durch einen innen liegenden Reaktionsraum,

Fig. 23 Einen Querschnitt durch einen aussen liegenden Reaktionsraum.

Fig. 1 stellt schematisch das Fliessbild der Wirkungsweise des Verfahrens dar. Durch den Balkenpfeil 1 wird der Brennstoff-Fluss I des im Reaktionsraum 3 in gasförmigen Zustand überzuführenden Brennstoffs I symbolisiert, dessen Spitze der Schwerkraft entsprechend nach abwärts gerichtet ist. Parallel dazu bewegt sich der als Wärmeträger dienende Brennstoff II im Ofenraum 4, dargestellt durch den Balkenpfeil 2 des Brennstoff-Flusses II. Dazwischen befindet sich im allgemeinen der Rauchgasraum 5, welcher sowohl mit dem Ofenraum 4 eine geschlossene Einheit bilden wie auch von ihm völlig getrennt sein kann.

Als Brennstoffe I und II kommen alle Arten von festen Brennstoffen wie Holz, Holzkohle, Torf, Braunkohle, Steinkohle, Anthrazit und Koks und deren Mischungen in Frage. Ausserdem können als Zusatzbrennstoffe hochsiedende flüssige oder leicht schmelzbare Brennstoffe wie Teer, Asphalt, Pech etc. verwendet werden. Die Brennstoffe I und II können untereinander verschieden oder von derselben Art sein. Die zu wählende Kombination wird durch wirtschaftliche Faktoren sowie durch Verbrennungs- bzw. Vergasungseigenschaften bestimmt. Im allgemeinen wird für den Brennstoff-Fluss I das wertvollere und ascheärmere Ausgangsmaterial verwendet. Eine besonders vorteilhafte Kombination ist trockenes Holz bzw. Holzkohle als Brennstoff I und mehr oder weniger feuchte Holzabfälle bzw. Torf. als Brennstoff II. Sofern die Herd- und Rosteinrichtungen dafür hergerichtet sind, lassen sich auch minderwertige aschereiche Kohlesorten wie beispielsweise Walliser Anthrazit, entweder allein oder als Zumischung verwenden.

Um eine gute Ausnutzung des als Heizmaterial dienenden Brennstoffs II zu erreichen, wird mit Luftvorwärmung auf Temperaturen von 200 bis 600° C gearbeitet. Die Verbrennungsluft 10 gelangt zunächst in einen Luftvorwärmer, der sich im Rauchgasraum 5 befindet und vom Rauchgas 12 durchströmt wird. In der Herdzone 9 treffen die Vergrennungsluft 10 und der Brennstoff-Fluss I 1 zusammen, wobei ersterer noch zusätzlich Sauerstoff 19 zur Leistungssteigerung und Erhöhung der Flammentemperatur beigemischt werden kann. In vorteilhafter Weise wird man vor allem beim Anfahren des Gerätes vom Sauerstoff 19 Gebrauch machen. In der Zone der höchsten Wärmeübertragungsleistung wird zur Erhöhung der Menge und zur Herabsetzung der Höchsttemperatur des Wärmeträgers mit umlaufenden Rauchgas 11 gearbeitet. Dadurch können optimale Bedingungen für den Wärmeaustauscher innerhalb vorgegebener Temperaturgrenzen erzeilt werden. Letztere sind bedingt einerseits durch die Warmefestigkeit und Zunderbeständigkeit der Materialien (obere Grenze), andererseits durch das Gleichgewicht und die Reaktionsgeschwindigkeit der Wassergasreaktion (untere Grenze). Für metallische Werkstoffe dürfte die obere Grenze bei 1250° bis 1300° C liegen. Die untere praktische Grenze der Wassergasreaktion liegt bei 850° bis 900° C. Der Reaktionsraum 3 hat verschiedene Zonen, die einzeln oder zu mehreren zusammengenommen in verschiedenen gasdicht von einander getrennten Kammern liegen. Der Brennstoff I wird zunächst in der Trocknungszone 6 vom Wasser weitegehend befreit und gelangt dann in die Entgasungszone 7, wo die trockene Destillation durchgeführt wird. Die in diesen beiden Zonen aus dem Brennstoff ausgetriebenen Substanzen, der Wasserdampf 15 und die brennbaren flüchtigen Bestandteile 17 werden dem Reaktionsraum 3 an geeigneter Stelle wieder zugeführt. Dabei kann das Wasser sowohl direkt als Dampf oder nach vorheriger Kondensation und erfolgter Wiederverdampfung als stark überhitzter Dampf in die Vergasungszone 8 eingeblasen werden. Zu letzterem kommt noch eine betrieblich bedingte Menge an Wasserdampf 16 aus Fremdwasser. Letzteres ist bei Betrieb des Reaktionsraumes 3 mit Brennstoffen, welche wenig Wasser und flüchtige Bestandteile enthalten wie Holzkohle und Koks unerlässlich. Für die aus der Entgasungszone 7 stammenden brennbaren flüchtigen Bestandteile 17 gilt ähnliches wie für den Wasserdampf 15. Gase wie Wasserstoff und Methan und andere niedrig siedende Kohlenwasserstoffe werden der Vergasungszone 8 direkt zugeleitet. Schwere flüchtige Stoffe wie beispielsweise der Teer können ebenfalls in Dampfform direkt eingeblasen werden. Es ist jedoch vorteilhafter, den Teer in einem Behälter zu sammeln und — gegebenenfalls also hochüberhitzter Dampf — nach Bedarf in die Vergasungszone 8 einzuspritzen. Letzterer kann zur Leistungssteigerung, zwecks Korrektur der Wärmebilanz und beim Anfahren des Gerätes noch zusätzlich Sauerstoff 18 eingeblasen werden. Zur Deckung der Warmebilanz der in der Vergasungszone 8 durchgeführten endo-

thermen Wassergasreaktion

$$C + H_2O \rightarrow CO + H_2$$

wird das entstehende Arbeitsgas selbst als Umlaufgas 13 verwendet, welches in einem Wärmeaustauscher dem Rauchgas 12 einen Teil seiner fühlbaren Wärme entzieht. Vorzugsweise wird dieses Verfahren auf einem Niedrigeren Temperaturniveau mit entsprechendem Umlaufgas 14 ebenfalls für die Entgasungszone 7 bzw. zum Aufheizen des Brennstoffs I zwischen Entgasungszone 7 und Vergasungszone 8 angewendet. Für das Umlaufgas 13 sind zwecks Erzielung eines günstigen Wärmeübergangs im Wärmeaustauscher hohe Geschwindigkeiten von 20 bis 50 m/s vorgesehen. Das fertige Erzeugnis verlässt den Reaktionsraum 3 als vornehmlich aus Kohlenmonoxyd, Wasserstoff, Methan und Kohlenwasserstoffen bestehendes, mindestens einen Heizwert von 8350 kJ/Nm$^3$ aufweisendes Arbeitsgas 20.

Das ganze Verfahren lässt sich sowohl bei Atmosphärendruck wie bei leicht erhöhten Drücken von beispeilsweise 1,1 bis 1,4 bar durchführen. Besonders vorteilhaft ist es jedoch, die Vergasung bei höheren Drücken wie 5 bis 10 bar oder in Spezialfällen bei 20 bis 30 bar durchzuführen. Da in allen Fällen ein stickstoffarmes bis stickstoffreies hochwertiges Arbeitsgas entsteht, dessen Heizwert durch Kracken der Teerstoffe und Karburieren bis über 12500 kJ/Nm$^3$ gesteigert werden kann, stellt die gleichzeitige Anlieferung des Gases unter erhöhtem Druck bei höchstmöglicher Anpassungsfähigkeit an stark wechselnde Leitstungsanforderung einen besonderen Vorteil des Verfahrens dar.

Die Figuren 2 bis 8 zeigen schematisch verschiedene Ausführungsbeispiele der Gaskreisläufe.

Fig. 2 zeigt den Fall der aufsteigenden Vergasung. Der Wasserdampf 21, das entstehende Arbeitsgas 20 und das Umlaufgas 13 bewegen sich im Gegenstrom zum Brennstoff-Fluss 1 im durch seine Wände 22 begrenzten Reaktionsraum 3, Der Wärmeübergang zwischen dem Rauchgas 12 und dem Umlaufgas 13 wird durch die Wand 23 des Wärmeaustauschers in Gegenstrom bewerkstelligt. Das durch das Gebläse 24 geförderte Umlaufgas 13 wird dem Reaktionsraum 3 mit der Temperatur $T_0$, vorzugsweise 1200° bis 1300° C bei Verwendung von metallischen Baustoffen, bei keramischen bis 1500° C und mehr, angeliefert, Es kühlt sich durch die endotherme Wassergasreaktion auf die Temperatur $T_1$, beispielsweise 850° bis 900° C ab. Das Arbeitsgas 20 verlässt den Reaktionsraum 3 unter einer Temperatur $T_2$, vorzugsweise zwischen 850 und 750° C liegend. Es ist jedoch nach Umständen erwünscht, das Gas bei höheren Temperaturen zu entnehmen, so dass $T_2$ auch über $T_1$ liegen kann. Ein solcher Fall tritt beispielsweise dann ein, wenn zunächst Druckgas erzeugt und dieses auf ein tieferes Niveau entspannt wird, wobei die potentielle Energie und die fühlbare Wärme des Gases zur Arbeitsleistung herangezogen wird. Dies kann durch eine Entspannungsturbine erfolgen, welche das Gebläse 24 antreibt. Dadurch wird ein elastischer Betrieb bei starken Lastschwankungen erreicht.

Fig. 3 zeigt den Fall der absteigenden Vergasung, wobei sich alle unter Fig. 2 genannten Medien im Reaktionsraum 3 in derselben Richtung, im Gleichstrom bewegen. Für den Wärmeaustauscher wird man vorteilhafterweise das Gegenstromprinzip beibehalten. Der Vorteil dieser Anordnung besteht darin, dass die Zone des Rostes, wo die Austragung der Asche stattfindet, auf der Temperatur $T_1$, also tiefer gehalten werden kann. Dies kann besonders dann von Bedeutung sein, wenn Brennstoffe mit höherem Aschgenhalt verwendet werden sollen und wenn die Rückstände zur Bildung tiefschmelzender Schlacken neigen.

In Fig. 4 ist ein kombinierter Kreislauf mit Umlaufgas 13 der Vergasungszone und Umlaufgas 14 der Entgasungszone und zwei Gebläsen 24 und 25 dargestellt. Das mit der Temperatur $T_0$ in den Reaktionsraum 3 eingeblasene Umlaufgas 13 wird diesem mit der Temperatur $T_1$ wieder entzogen, dann auf eine Temperatur $T_3$, höher als $T_1$, erhitzt und dem Reaktionsraum 3 in der Aufheizzone wieder zugeführt. Es durchströmt als Umlaufgas 14 die Entgasungszone und wird derselben bei der Temperatur $T_4$, welche vorzugsweise bei 350° bis 500° C liegen kann, entnommen, um in einem weiteren Wärmeaustauscher wieder auf die Temperatur $T_0$ gebracht zu werden. Das Arbeitsgas 20 verlässt der Reaktionsraum bei der verhältnismässig tiefen Temperatur $T_2$ (beispielsweise 600° bis 700° C), welche zwischen $T_3$ und $T_4$ liegt. Dieses Verfahren eignet sich für Brennstoffe, die eine lange Entgasungs- und Schweldauer benötigen. Auf diese Weise werden zwei Zonen hoher Temperaturen ($T_0$, $T_3$) geschaffen.

Fig. 5 zeigt eine Gasführung mit absteigender Vergasung. Im Gegensatz zu Fig. 3 wird jedoch das frisch gebildete Arbeitsgas nicht am Ende Brennstoff-Flusses 1 entnommen, sondern zusammen mit dem Umlaufgas 13 durch das Gebläse 24 abgesaugt, nochmals erhitzt und der Brennstoff-Säule auf höherem Niveau wieder eingeblasen. Die Entnahme erfolgt noch höher oben bei der üblichen Temperatur $T_2$. Bei diesem Verfahren wird eine höhere Glühzone konstanter hoher Temperatur geschaffen, wobei der Wasserdampf 21 zweimal durch das Glühbett hindurchgeleitet wird. Diese Methode ist daher besonders für schwer zu vergasenden reaktionsträgen Brennstoff geeignet.

Fig. 6 zeigt eine Variante von Fig. 2, wobei das Umlaufgas 13 vom Gebläse 24 zunächst durch einen ersten, im Gleichstrom mit dem Rauchgas 12 arbeitenden Wärmeaustauscher gedrückt wird. Diese Gasführung kann dann von Vorteil sein, wenn in einem ersten Wärmeaustauscher bei verhältnismässig tiefen und möglicht konstanten Temperaturen ein wärmebindender Prozess durchgeführt werden soll. Als Beispiele könnten Wasserdampfüberhitzung, Teerverdampfung, Kracken, Karburieren oder andere chemische Umsetzungen gennant werden. Die entsprechenden Zusatzeinrichtungen können sich dann auf einen kleinen, leicht zu reinigenden, auswechselbaren Wärmeaustauscher beschränken.

In Fig. 7 ist ein Verfahren mit zwei völlig getrennten Kreisläfen für die Entgasungszone 7 und die Vergasungszone 8 (siehe Fig. 1) dargestellt. Der am Gebläse 24 hängende Kreislauf der Vergasungszone 8 entspricht grundsätzlich dem Schaubild nach Fig. 2. Der zusätzliche Kreislauf der Entgasungszone 7 wird durch das Gebläse 25 und einen im Gegenstrom zum Rauchgas 12 arbeitenden weiteren Wärmeaustauscher gebildet. Das aufgeheizte Umlaufgas 14 wird in die Destillationszone 7 geblasen, wo Temperaturen von 350° vis 500° C ($T_5$) herrschen. Es kühlt sich dabei auf die Temperatur der Beschickung ab und in der Aufheizzone entnommen. Dabei kann je nach Menge des Umlaufgases 14 und nach Betriebsführung die Temperatur $T_6$ nur wenig von $T_5$ verschieden sein oder beträchtlich darüber liegen (600° bis 750° C). Das Verfahren mit Kreislauf der Entgasungszone 7 mit Umlaufgas 14 im Gleichstrom zum Brennstoff-Fluss 1 schafft eindeutige Verhältnisse für den Fall, dass die Entgasungszone 7 nicht mechanisch von der Vergasungszone 8 getrennt ist und in einer separaten Kammer liegt. Im anderen Fall lässt sich vorteilhafterweise entgegen Fig. 7, gemäss Fig. 1, im Gegenstrom verfahren.

Fig. 8 zeigt eine Variante von Fig. 7, wobei nur ein Gebläse 24 vorhanden und das Gebläse 25 durch die Gasstrahlpumpe 26 ersetzt ist. Dadurch werden die beiden Kreisläufe zum Teil ineinander verschlungen, ergeben jedoch grundsätzlich ein Fig. 7 ähnliches Bild. Am Austritt des Geblässes 24 wird der Umlaufgasstrom in zwei Teile getrennt, wobei ein Teil die kinetische Energie für die Gasstrahlpumpe 26 liefert. Das Umlaufgas 14 ist daher gemischt, was bei der Prozessführung unter Umständen zu beachten ist. Ferner muss das Gebläse 24 für eine höhere Gasmenge als in allen vorher beschriebenen Ausführungsbeispielen vorgesehen sein. Die Vorteile ergeben sich durch die grössere Einfachheit der Anlage.

Fig. 9 zeigt einen schematischen Längsschnitt durch den grundsätzlichen Aufbau einer Vorrichtung zur Durchführung des oben beschriebenen Verfahrens. Der Brennstoff des Flusses I gelangt in dem mit dem Deckel 28 verschliessbaren zentralen Brennstoffbehälter 27, während derjenige des Flusses II inden ebenfalls mit Deckeln 30 versehenen mantelförmigen Brennstoffbehälter 29 abgefüllt wird. Durch die Kammerverschlüsse 31 und 32 ist der gesamte zentrale schachtförmige Teil des Apparates, in welchem die Reaktionen durchgeführt werden, in mehrere Kammern unterteilt. An den brennstoffbehälter 27 schliesst die Zwischenkammer 33 an. Es folgt der eigentliche Reaktionsraum 3, welcher unten durch den Rost 34 und den Aschebehälter 35 abgeschlossen ist. In einem gewissen Abstand vom schachtförmigen zentralen Teil befindet sich der mantelförmige Ofenraum 4, welcher nach unten durch einen Rost 39, einen Aschebehälter 40 und eine Ringleitung 38 begrenzt ist. Der Zwischenraum zwischen Schacht und Mantel ist durch verschiedene Apparate, welche alle dem Wärmeaustausch dienen, ausgefüllt. Die Verbrennungsluft 10 (Fig. 1) gelangt über den Lufteintrittstutzen 36 in den Luftvorwärmer 44 und durch Luftleitung 37 über die Ringleitung 38 in die Herdzone 9 (Fig. 1), wo sie auf den durch den Ofenraum 4 geometrisch begrenzten Brennstoff-Fluss 2 (Fig. 1) trifft. Das hier erzeugte Rauchgas 12 (Fig. 1) durchströmt einen ersten Wärmeaustauscher 41, welcher die für die Wassergasreaktion benötigte Wärmemenge an den Reaktionsraum 3 abgibt. Es folgt ein zweiter Wärmeaustauscher 42, der auf tieferem Temperaturniveau weitere Energie (vornehmlich für die Entgasungszone 7, Fig. 1) an den zentralen schachtförmigen Teil des Apparates vermittelt. Daneben bzw. darüber befindet sich der Teerbehälter 43, in welchem neben eigenem Teer auch andere Brennstoffe wie Pech, Asphalt etc. vorgewärmt bzw. geschmolzen werden können. Uber den bereits erwähnten Luftvorwärmer 44 gelangt das Rauchgas 12 durch den Rauchgasabzug 45 ins Freie. Das im Reaktionsraum 3 gebildete Arbeitsgas 20 (Fig. 1) gelangt über die Gasleitung 46 und den Dampfkessel 47 in den Gasaustrittstutzen 48. Dabei gibt es seine fühlbare Wärme weitgehend an das zu verdampfende, für die Wassergasreaktion benötigte Wasser ab.

Der praktische Aufbau der Vorrichtung ist durch die vorliegende schematische Darstellung keineswegs erschöpft. Der Übersichtlichkeit halber sind alle Zusatzapparaturen und -Maschinen wie Dampf- und Teerüberhitzer, Umwälz- und Speisepumpen, Gebläse etc. sowie sämtliche Antriebsmaschinen weggelassen worden. Als letztere können Verwendung finden: Elektromotoren, Abgasturbinen (Turboladerprinzip), Druckwellenmaschinen (auf dem Verdichtungsstoss der Abgases von Verbrennungsmotoren beruhende rotierende Maschinen). Dampfturbinen (Ausnutzung des Druck- und Wärmegefälles des für des Wassergasprozess benötigten Dampfes bei Zwischenüberhitzung), Entspannungsturbinen (Auswertung des Druckgefälles des Arbeitsgases unter Wärmeentzug im Falle der Druckgaserzeugung) und Hilfs-Gasturbinen (Verwendung eines Teils des Arbeitsgases zur Erzeugung mechanischer Energie). Ferner sind zahlreiche Möglichkeiten von auf dem Ejektorprinzip beruhenden Strahlpumpen ausführbar: Gasstrahl/Gas-Saugpumpe, Gasstrahl/Teerdampf-Pumpe, Dampfstrahl/Gas-Saugpumpe, Dampfstrahl/Teerdampfpumpe etc. Der grundsätzliche Aufbau der Vorrichtung ist ferner nicht auf das vorliegende Ausführungsbeispiel beschränkt. Die Querschnitte der Brennstoffsäulen könnenkreisförmig, quadratisch oder rechteckförmig sein. Für transportable Anlagen wird man den ersten beiden Formen, für stationäre industrielle dagegen der letzteren wohl den Vorzug geben. Bei runden und quadratischen Ausführungen wird zweckmässigerweise das Baukastenprinzip angewandt.

In den Figuren 10 und 11 wird das Baukastenprinzip einer gemäss Fig. 9 aufgebauten Vorrichtung gezeigt. Die Bezugszeichen entsprechen daher denjenigen der vorangehenden Figur und bedürfen keiner weiteren Erklärung.

In Fig. 12 ist der Längsschnitt und in Fig. 13 der Querschnitt einer einfachen Ausführungsform der Vorrichtung zur Gaserzeugung dargestellt. Die Brennstoffbehälter 27 und 29 und die Kammerverschlüsse 31 und 32 sowie die Zwischenkammer 33 entsprechen genau der in Fig. 9 gezeigten Darstellung. Ofenraum und Rauchgasraum bilden eine Einheit, so dass kein spezieller Rauchgasraum vorhanden ist. Das Rauchgas 12 (Fig. 1) streicht durch den Ofenraum 4, wärmt den Brennstoff II direkt vor und verlässt den Apparat über den Rauchgasabzug 45, nachdem es zuvor den Luftvorwärmer 44 durchströmt hat. Der Ofenraum 4 ist an seinem äusseren Umfang mit einer feuerfesten Auskleidung 51 und einem Isoliermantel 53 versehen. Für erstere kann Schamotte-Mauerwerk oder -Stampfmasse, für letzteren Isolierstein oder Glas- bzw. Schlackenwolle Verwendung finden. Die Roste 34 und 39 und die Aschebehälter 35 und 40 entsprechen Fig. 9. Der Aschebehälter 35 des Reaktionsraumes wird vorzugsweise ebenfalls isoliert, um Wärmeverluste nach unten möglichst zu vermeiden. Der Reaktionsraum 3 wird durch ein aus zunderbeständigem warmfesten metallischen Werkstoff bestehenden Gefäss 53, in dessen geneigtem Boden sich Eintrittsöffnungen 49 und 50 für Umlaufgas bzw. Wasserdampf befinden, abgeschlossen. Das Umlaufgas 13 wird dem Reaktionsraum 3 in unteren Drittel entnommen und durch das Gebläse 24 in den einen Ringspalt bildenden Wärmeaustauscher 41 gepresst, wo es mit hoher Geschwindigkeit nach unten strömt. Der Wärmeaustauscher 41 besteht aus demselben Werkstoff wie das Gefäss 53 und bildet mit diesem zusammen eine Einheit. Neben dem ständig einzublasenden Wasserdampf 21 kann zeitweise nach Bedarf zusätzlich oder allein Sauerstoff 18 in den Reaktionsraum 3 gepresst werden. Das entstehende Arbeitsgas verlässt letzteren über die Gasleitung 46, welche in einerwendelförmigen Rohrschlange endet, und gibt seine fühlbare Wärme an den Dampfkessel 47 ab, um über den Gasaustrittsutzen 48 der Gasreiningungsanlage und dem Verbraucher zugeführt zu werden.

Diese Ausführungsform ist nicht auf die in Fig. 12 und Fig. 13 gezeigte Darstellung beschränkt. Insbesondere lässt sich der ringförmige Wärmeastauscher alternativ oder zusätzlich an der äusseren Begrenzung des Ofenraumes 4, bündig mit der feuerfesten Auskleidung 51 anordnen.

Fig. 14 zeigt einen Längsschnitt durch eine andere Ausführungsform des Wärmeaustauschers. Dieser, als innerer Wärmeaustauscher 54 ausgeführte Apparat stellt mit dem Gefäss 53 eine Einheit dar. Sein innerer wendeltreppenförmiger Aufbau zwingt das Umlaufgas 13 mit sehr hoher Geschwindigkeit verhältnismässig grosse Berührungsflächen zu bestreichen. Der Querschnitt der eine Schlaubenlinie darstellenden Kanalachse kann quadratisch, rechteckig oder auch rund sein. Der Einfechheit halber und zwecke besserer Raumausnutzung wurde hier der quadratischen Ausführung der Vorzug gegeben.

Fig. 15 zeigt eine ähnliche Ausführung wie Fig. 14. Hier wird das Umlaufgas 13 in zwei Teilströme aufgespalten, die je einen inneren 54 und einen äusseren 55 Wärmeaustauscher durchströmen.

In den Figuren 16 bis 19 sind vier verschiedene Ausführungsformen für Wärmeaustauscher bei Vorhandensein eines gesonderten Rauchgasraumes 5 gemäss Fig. 1 dargestellt.

Fig. 16 zeigt als Wärmeaustauscher 41 einen einfachen, durch Rippen mit dem Gefäss 53 verbundenen Mantel. Der dadurch gebildete Ringquerschnitt kann kreisförmige, quadratische oder rechteckige Umgrenzung aufweisen. Das Umlaufgas 13 bewegt sich im Gegenstrom zum Rauchgas 12. Der mit dem Brennstoff II beschickte Ofenraum 4 weist in seinem unteren Teil eine feuerfeste Herdauskleidung 56 auf. Der Rauchgaskanal 57 ist vom Ofenraum 4 durch eine äussere feuerfeste Auskleidung 58 getrennt. Das Rauchgas 12 kann dank erzwungener Strömung mit hoher Geschwindigkeit durch den Kanal 57 gespresst werden, wobei es gegebenenfalls auch unter höherem als Atmosphärendruck stehen kann. Durch diese Konstruktion und betriebstechnischen Massnahmen wird der Wärmeübergang gegenüber demjenigen der vorgängig beschriebenen einfachen Apparate erhöht, woraus eine beträchtliche Leistungssteigerung resultiert. Der Wärmeaustauscher 41 kann auch doppelwandig ausgeführt werden, wobei der Rauchgaskanal 57 einen zwischen diesen Wänden gebildeten Ringraum darstellt.

Fig. 17 zeigt das Prinzip von Fig. 14 sinngemäss auf den Rauchgaskanal 57 angewendet. Der mit dem Gefäss 53 verbundene wendelförmige Wärmeaustauscher führt das Umlaufgas 13 auf einer Schraubenlinie im Kreuzstrom/Gegenstrom zum Rauchgas 12. Diese Anordnung lässt sich gemäss Fig. 15 auch beidseitig des Rauchgaskanals 57 ausführen.

Fig. 18 zeigt einen wendelförmigen aus einem Rohr bestehenden Wärmeaustauscher 60, der sich inmitten des Rauchgaskanals 57 befindet und vom Rauchgas 12 im Kreuzstrom/Gegenstrom allseitig umspült wird. Durch die Anordnung der quer angeströmten Rohr wird im Rauchgas 12 eine besonders hohe Turbulenz erzeugt, wodurch der Wärmeübergang verbessert wird. Die Ausführungsformen sind nicht auf einen einzigen Rohrwendel beschränkt. Es kann in vorteilhafter Weise auch ein Rohrbündel konzentrisch geführter Rohre verwendet werden.

Fig. 19 zeigt einen Wärmeaustauscher 61, bestehend aus zwei koaxialen Rohrwendeln. Im inneren Rohr wird das Umlaufgas 13 von oben nach unten geführt, während das Rauchgas 12 in umgekehrter Richtung im Ringraum zwischen innerem und äusserem Rohr nach oben strömt (Gegenstromprinzip). Um den inneren Rohrwendel in seiner Lage festzuhalten, sind in gewissen Abständen Distanzhalter zum äusseren Rohr vorhanden (in dieser Figur nicht gezeichnet). Aus mechanischen Gründen wird man den vom äusseren Rohrwendel nicht beanspruchten Raum zwischen dem Gefäss 53 und der äusseren feuerfesten Auskleidung 58 des Rauchgaskanals zweckmässig mit feuerfester keramischer Masse ausfüllen. Dazu kann beispielsweise Quarz, Tonerde oder magnesia verwendet werden. Diese Massnahme erweist sich besonders dann von Vorteil, wenn sowohl der Reaktionsraum 3 wie der Rauchgasraum 5 (Fig. 1) unter erhöhtem Druck betrieben werden. In diesem Falle ist es möglich, den gesamten Apparat mit einem unter Vorspannung stehenden druckfesten Metallmantel (Panzer) zu umgeben.

In Fig. 20 ist der Längsschnitt und in Fig. 21 der Querschnitt des Aufbaus eines unter erhöhtem Innendruck stehenden Apparates ausschnittweise dargestellt. Der den Brennstoff II führenden Ofenraum 4 wird durch einen äusseren 63 und einen inneren 64 Blechmantel begrenzt. Der anschliessende Rauchgaskanal 57 wird durch eine äussere und eine innere 67 feuerfeste Auskleidung gebildet, welche ihrerseits durch einen äusseren 65 bzw. inneren 66 isoliermantel abgeschlossen sind. In ersterem befindet sich das vom Rauchgas 12 quer angeströmte Rohrbündel 68 (Wendel) des Wärmeaustauschers. Der Isoliermantel 66 ist seinerseits durch den inneren Blechmantel 69 des Rauchgaskanals von der Umgebung abgeschlossen. Der Reaktionsraum 3 ist durch einen inneren Blechmantel 74 aus hochhitzebeständigem zunderfestem Werkstoff auf der Basis von Fe/Cr/Ni oder Fe/Cr/Al oder Cr/Ni begrenzt. Zu seinem Schutz vor Verzunderung und Abrieb durch den Brennstoff I kann der Blechmantel 74 durch weitere mehr oder weniger lose befestigte, auswechselbare Blecheinlagen 77 ausgekleidet werden. Diese Einlagen sollen sich vorteilhafterweise überlappen und ineinander greifen, wie in Fig. 21 gezeigt wird. Sie können bevorzugt aus billigeren Cr/Al- oder Cr/Si-Stählen oder aus alitierten C-armen Stählen ($Fe Al_3$) bestehen. Der innere Blechmantel 74 ist nicht zur Aufnahme der durch den Innendruck im Reaktionsraum 3 hervorgerufenen Zugspannungen bestimmt, sondern soll dem Gefäss lediglich die innere Gestalt geben. Er kann deshalb verhältnismässig dünn ausgeführt werden. Damit er keine Zugspannungen erleidet und nur den Innendruck weitergibt, ist er entweder mit Löchern oder Schlitzen versehen oder besteht aus mehreren sich aneinanderlegenden überlappten Segmenten. Zwecks Zentrierung und Fixierung seines Abstandes zum Druckpanzer 72 ist er mit Distanzringen 75 und Distanzrippen 76, die ein orthogonales Gerüst bilden, versehen. Der Zwischenraum zwischen 74 und 72 ist mit keramischer Masse 73 ausgefüllt. Diese Masse in Form von Kieselgur, Quarzsand, Tonerde- oder Magnesiapulver wird isostatisch auf Druck beansprucht, der von Druckpanzer 72 aufgenommen wird.

Dieser kann je nach Temperatur und Beanspruchtung aus Stahl erhöhter Dauerstandfestigkeit oder aus Cr- oder Cr/Ni-Stahl bestehen. An den Panzer 72 schliesst sich der äussere Isoliermantel 71 des Reaktionsraumes sowie der zugehörige äussere Blechmantel 70 an. Der Isoliermantel 71 besteht vorzugsweise aus Glas- oder Schlackenwolle, die ebenfalls unter eine allerdings weit geringeren Druckspannung seitens der Blechmantels 70 stehen kann. Da die Blechmäntel 69 und 70 ohnehin gekühlt werden müssen, um das erforderliche Temperaturgefälle quer zur Wandung zu erzeugen, wird der zwischen ihnen liegende Ringspalt als Luftkanal 62 ausgebildet, durch den die vorzuwärmende Verbrennungsluft 10 streicht.

Die Ausführungsformen sind nicht auf das vorliegende Beispiel beschränkt. Insbesondere ist ein Hochtemperatur-Reaktionsraum 3 für Temperaturen über 1250° C denkbar, der unter Vermeidung metallischer Werkstoffe völlig aus keramischem Material z.B. aus Siliziumkarbid oder Sintermagnesit besteht. Es können dafür auch keramische Verbundwerkstoffe hoher Elastizität wie Quarzschaum etc. in Frage kommen. Wesentlich ist, dass in ihnen keinerlei Zugspannungen auftreten. Sie müssen daher entweder porös, mit Löchern versehen oder aus einzelnen Segmenten zusammengesetzt sein.

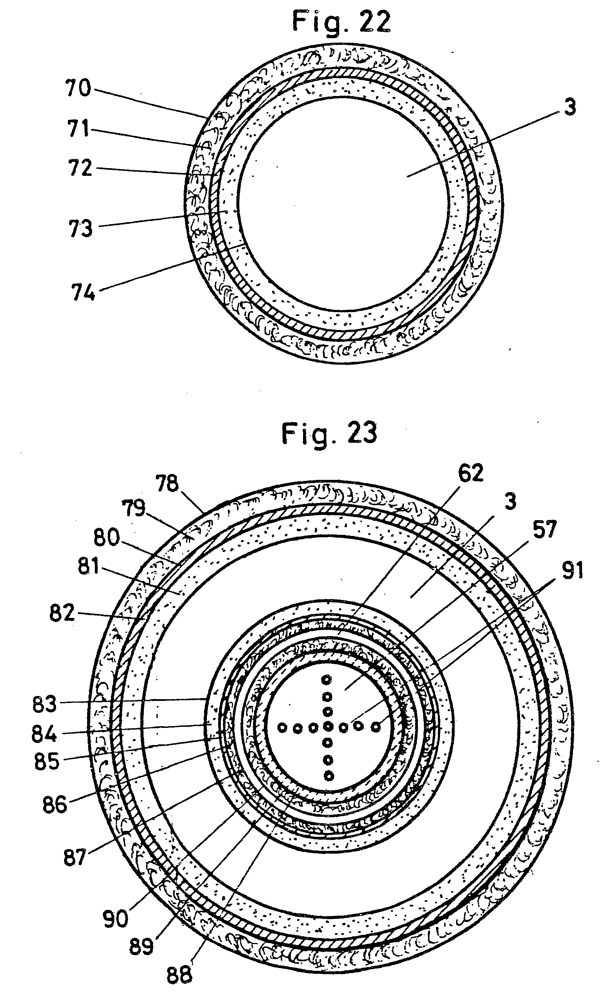

In Fig. 22 ist der Querschnitt eines innen liegenden zylindrischen Gefässes für den Reaktionsraum 3 nochmals schematisch dargestellt. Die Bezugszeichen entsprechen der Fig. 21.

Fig. 23 zeigt den Querschnitt einer Anordnung mit innenliegendem Rauchgaskanal 57 und aussenliegendem als Hohlzylinder ausgebildetem Reaktionsraum 3. Das Gefäss wird durch den aussenliegenden Blechmantel 78 der Aussenwand begrenzt, auf den ein Isoliermantel 79, ein Druckpanzer 80, eine keramische Masse 81 und der aus zunderbeständigem Material gefertigte innenliegende Blechmantel 82 der Aussenwand folgen. Die Innenwand des Reaktionsraumes 3 ist analog und symmetrisch aufgebaut: Innenliegender Blechmantel 83, keramische Masse 84, aud Druckspannung und Knickung beanspruchter Druckpanzer 85, Isoliermantel 86 und aussenliegender Blechmantel 87. Der Luftkanal 62 trennt das Gefäss vom Rauchgaskanal 57, der durch die feuerfeste Auskleidung 88 begrenzt ist, an die sich der Isoliermantel 89 und der Blechmantel 90 anschliessen. Das Rohrbündel 91 des Wärmeaustauschers verläuft hier aus Platzgründen in vorteilhafter Weise achsparallel zum Rauchgaskanal 57 und wird vom Umlaufgas im Gegenstrom zum Rauchgas durchströmt.

**Patentansprüche**

1. Verfahren zur kontinuierlichen Erzeugung von hochwertigen Generator- und Wassergas aus festen und hochsiedenden flüssigen Brennstoffen ohne externe Wärmespeicherung, insbesondere zum Betrieb von Verbrennungsmotoren mit häufigen Lastwechsel, wobei in Richtung des Prozessablaufs gesehen zwei im wesentlichen parallel verlaufende Brennstoff-Flüsse (1, 2) vorgesehen sind, dadurch gekennzeichnet, dass der Brennstoff des ersten Flusses (1) in einem Reaktionsraum (3) nacheinander einem Trocknungs-, mindestens teilweisen Entgasungs- und Vergasungsprozess unterworfen wird und der Brennstoff des zweiten Flusses (2) zur indirekten Beheizung des Brennstoffes des ersten Flusses (1) benutzt wird und dass mindestens ein Teil des zu erzeugenden Arbeitsgases (20) im Fluss (1) der ersten Brennstoffs und mindestens ein Teil des Rauchgases (12) im Fluss (2) des zweiten Brennstoffs in je einem geschlossenen Kreislauf als Wärmeträger benutzt wird, dass ferner mindestens ein Teil des beim Trocknungs- und Entgasungsprozess sich bildenden Wasserdampfs (15) in flüssiger oder gasförmiger in die Vergasungszone (8) des Flusses (1) des ersten Brennstoffs zurückgeführt wird.

2. Verfahren nach Anspruch 1, dadurch gekennzeichnet, dass sowohl in der Anfahrperiode wie in Betriebsperioden höherer Leitstungsanforderung mindestens in einem der Brennstoff-Flüsse (1, 2) mit Zusatz von reinem Sauerstoff (18, 19) gefahren wird.

3. Verfahren nach Anspruch 1, dadurch gekennzeichnet, dass der Trocknungsprozess einerseits sowie der Entgasungs- und Vergasungsprozess andererseits des Brennstoffs des ersten Flusses (1) je in einem getrennten Raum durchgeführt wird.

4. Verfahren nach Anspruch 3, dadurch gekennzeichnet, dass der Raum des Trocknungsprozesses und der Raum des Entgasungs- und Vergasungsprozesses je unter dem gleichen Druck stehen und dass dieser Druck höchstens 1, 1 bar beträgt.

5. Verfahren nach Anspruch 4, dadurch gekennzeichnet, dass der Druck höher als 1, 1 bar und niedriger als 10 bar beträgt.

6. Verfahren nach Anspruch 3, dadurch gekennzeichnet, dass der Raum des Trocknungsprozesses gegenüber dem Raum des Entgasungs- und Vergasungsprozesses unter Ueberdruck steht und mindestens ein Teil des im Trocknungsprozess verdampften Wassers in gasförmiger Phase dem Brennstoff in die Vergasungszone (8) zur Erzeugung von Wassergas wieder zugeführt wird.

7. Verfahren nach Anspruch 3, dadurch gekennzeichnet, dass das im Trocknungsprozess verdampfte Wasser zunächst in einem Kühler kondensiert wird und mindestens ein Teil einem Wasser- bzw. Dampfkessel (47) zugeführt und zur mittelbaren Wassergaserzeugung dem Brennstoff wieder zugeführt wird.

8. Verfahren nach Anspruch 3, dadurch gekennzeichnet, dass der Raum des Entgasungs- und Vergasungsprozesses gegenüber dem Raum des Trocknungsprozesses und der umgebenden Atmosphäre unter Ueberdruck steht und als Arbeitsgas ein Druckgas erzeugt wird.

9. Verfahren nachs Anspruch 1, dadurch gekennzeichnet, dass der als Wärmeträger und Umlaufgas (13) benutzte Teil des Arbeitsgases (20) durch die fühlbare Wärme des in einen Wärmeaustauscher (41) nach dem Gegenstrom-, Gleichstrom- oder Kreuzstromprinzip zirkulierenden Rauchgases (12) auf eine für die Wassergasreaktion

$$C + H_2O \rightarrow CO + H_2$$

notwendige Temperatur von 1100°—1250°C aufgeheizt wird.

10. Verfahren nach Anspruch 1, dadurch gekennzeichnet, dass die im Raum des Entgasungsprozesses des Brennstoffs des ersten Flusses (1) anfallenden flüchtigen Bestandteile (17) nach aussen abgeführt, überhitzt und dem Brennstoff in die Vergasungszone (8) wieder zugeführt werden.

11. Verfahren nach Anspruch 1, dadurch gekennzeichnet, dass zur Einblasung der flüchtigen Bestandteile die Saugewirkung wenigstens eines Teils des als Wärmeträger im geschlossenen Kreislauf geführten Arbeitsgases unter Ausnutzung des Ejektorprinzips benutzt wird.

12. Verfahren nach Anspruch 1, dadurch gekennzeichnet, dass der Vergasungsprozess durch Führung des als Wärmeträger und Umlaufgas (13) dienenden Teils des Arbeitsgases (20) und durch Führung des Wasserdampfes (21) im Gegenstrom zur Bewegungsrichtung des Brennstoffs aufsteigend durchgeführt wird.

13. Verfahren nach Anspruch 1, dadurch gekennzeichnet, dass der Vergasungsprozess durch Führung des als Wärmeträger und Umlaufgas (13) dienenden Teils des Arbeitsgases (20) und durch Führung des Wasserdampfes (21) im Gleichstrom zur Bewegungsrichtung des Brennstoffs absteigend durchgeführt wird.

14. Verfahren nach Anspruch 1, dadurch gekennzeichnet, dass der Vergasungsprozess durch Führung des als Wärmeträger und Umlaufgas (13) dienenden Teils des Arbeitsgases

(20), ferner durch Führung des Wasserdampfes (21) und Anordnung der Entnahmestelle des Arbeitsgases (20) derart gesteuert wird, dass das Arbeitsgas (20) beim Verlassen des Reaktionsraumes (3) nochmals durch die heisseste Brennstoffzone geleitet wird.

15. Verfahren nach Anspruch 14, dadurch gekennzeichnet, dass durch Aufteilung oder doppelte Rückführung des als Wärmesträger umlaufenden Teils des Arbeitsgases (20) in der Vergasungszone zwei voneinander unabhängige Brennstoffzonen Höchster Temperatur geschaffen werden.

16. Verfahren nach Anspruch 1, dadurch gekennzeichnet, dass der sich in der Entgasungszone (7) befindliche Teil des vorwiegend die flüchtigen Bestandteile der Trockendestillation enthaltenden Arbeitsgases (20) in einem separaten Kreislauf umgewälzt und durch die fühlbare Wärme des Rauchgases (12) aufgeheizt wird.

17. Verfahren nach Anspruch 16, dadurch gekennzeichnet, dass zum Transport des Gases der Entgasungszone (7) ein abgezweigter Teil des Umlaufgases (13) des ersten Kreislaufes der Vergasungszone (8) unter Ausnutzung der Ejektorwirkung benutzt wird.

18. Verfahren nach Anspruch 1, dadurch gekennzeichnet, dass der im geschlossenen Kreislauf als Wärmeträger und Umlaufgas (13) dienende Teil des Arbeitsgases (20) in einem ersten Abschnitt im Gleichstrom und in einem zweiten Abschnitt im Gegenstrom zum Rauchgas (12) geführt wird.

19. Verfahren nach Anspruch 1, dadurch gekennzeichnet, dass die Fühlbare Wärme des Arbeitsgases (20) zur Erzeugung von Wasserdampf für den Vergasungsprozess benutzt wird

20. Verfahren nach Anspruch 1, dadurch gekennzeichnet, dass die fühlbare Wärme des Rauchgases (12) des Brennstoffes des zweiten Flusses (2) zur Erwärmung und Verflüssigung eines hochsiedenden zusätzlichen Brennstoffes des ersten Flusses (1) benutzt wird.

21. Verfahren nach Anspruch 1, dadurch gekennzeichnet, dass die fühlbare Wärme des Rauchgases (12) des Brennstoffes des zweiten Flusses (2) zur Vorwärmung der Verbrennungsluft (10) für den zweiten Brennstoff-Fluss (2) benutzt wird.

22. Verfahren nach Anspruch 1 dadurch gekennzeichnet, das der Brennstoff des ersten Flusses (1) aus Holz, Holzkohle, Torf, Braunkohle, Steinkohle, Anthrazit, Koks, Schweröl, Teer, Pech, Asphalt oder Mischungen dieser Stoffe und der Brennstoff des zweiten Flusses (2) aus Holz, Holzkohle, Torf, Braunkohle, Steinkohle, Anthrazit, Koks oder Mischungen dieser Stoffe besteht und dass Teer, Pech und Asphalt in flüssiger Phase · dem Vergasungsprozess zugeführt werden.

23. Vorrichtung zur Durchführung des Verfahrens nach Anspruch 1, bestehend aus Mittein zur Aufnahme der festen und hochseidenden flüssigen Brennstoffe, dadurch gekennzeichnet, das für den ersten Brennstoff-Fluss (1) ein aus mehreren Kammern bestehender, zentral angeordneter Reaktionsraum (3) für den zweiten Brennstoff-Fluss (2) ein den Reaktionsraum (3) mantelförmig umschliessender Ofenraum (4) und dazwischen mindestens ein das Rauchgas (12) und das Arbeitsgas (20) führender, zur Beheizung des Reaktionsraumes (3) dienender Wärmeaustauscher (41) vorgesehen ist.

24. Vorrichtung nach Anspruch 23, dadurch gekennzeichnet, dass ein den Reaktionsraum (3) oder den Ofenraum (4) mantelförmig umschliessender Wasser- bzw. Dampfkessel (47) und ein Dampfüberhitzersowie im zweiten Brennstoff-Fluss (2) ein Luftvorwärmer für die Verbrennungsluft (44) vorgesehen ist.

25. Vorrichtung nach Anspruch 24, dadurch gekennzeichnet, dass der Ueberhitzer mit einer Dampfstrahlpumpe ausgerüstet ist, welche zur Förderung flüchtiger Bestandteile aus der Entgasungszone (7) des Reaktionsraumes (3) und/oder verflüssigter hochsiedender Brennstoffe in die Vergasungszone (8) des Reaktionsraumes (3) dient.

26. Vorrichtung nach Anspruch 23, dadurch gekennzeichnet, dass zur Umwählzung des Arbeitsgases (20) einerseits und/oder des Rauchgases (12) andererseits im Wärmeaustauscher (4) mindestens je ein durch einen Elektromotor, eine Abgasturbine, eine Entspannungsturbine oder eine Dampfturbine angetriebenes Gebläse oder eine die Abgasenergie ausnutzende Druckwellenmaschine vorgesehen ist.

27. Vorrichtung nach Anspruch 23, dadurch gekennzeichnet, dass zur Gasumwälzung in dem Nebenkreisläufen auf dem Ejektorprinzip. basierende Gas und/oder Dampfstrahlpumpen vorgesehen sind.

28. Vorrichtung nach Anspruch 23, dadurch gekennzeichnet, dass im zweiten Brennstoff-Fluss (2) zur Förderung der Verbrennungsluft (10) ein durch einen Elektromotor, eine Abgasturbine, eine Entspannungsturbine oder eine Dampfturbine angetriebenes Gebläse vorgesehen ist.

**Claims**

1. A process for the continuous generation of high-grade producer gas and water gas from solid and high-boiling liquid fuels which does not require external heat storage and is especially useful for the operation of internal combustion engines where the load undergoes frequent changes, whereby seen from the direction of the process reaction there is provided two, essentially parallel-running fuel flows (1, 2), characterized by the features that

— the fuel of the first flow (1) is subjected to the successive processes of drying, at least partial distillation and gas production in the reaction space (3),

— the fuel on the second flow (2) is used to

indirectly heat the fuel of the first flow (1),

— at least part of working gas (20) produced in the first fuel flow (1) and at least a part of the burned gas (12) in the second fuel flow (2) are both employed as heat carriers in closed circulation systems, and that further

— at least a part of the water vapor (15) formed by the drying and distillation processes is fed back into the gas production zone (8) of the first fuel flow (1), either in the liquid or gas phase.

2. Process as recited in Patent Claim 1, whereas both in the starting-up phase and in the operating phase, higher power requirements can be obtained with the addition of pure oxygen (18, 19) in at least one of the fuel flows (1, 2).

3. Process as recited in Patent Claim 1, whereas the drying process as well as the distillation and gas production processes of the first flow (1) are each carried out in a separate space.

4. Process as recited in Patent Claim 3, whereas the space where the drying process is carried out and the space where the distillation and gas production is carried out are all under the same pressure, and that this pressure is at most 1.1 bar.

5. Process as recited in Patent Claim 4, whereas said pressure is greater than 1.1 bar and less than 10 bar.

6. Process as recited in Patent Claim 3, whereas the space where the drying process is carried out is under pressure with respect to the space where the distillation and gas production processes are carried out, and that at least part of the water that is vaporized in the drying process is again fed in as a gas to the fuel in the gas generation zone (8) for the production of water gas.

7. Process as recited in Patent Claim 3, whereas the water vaporized in the drying process is first condensed in a condenser and then at least part of this water is fed to a water or, as the case may be, a steam boiler (47) which is then used to feed the fuel for the indirect generation of water gas.

8. Process as recited in Patent Claim 3, whereas the space where the distillation and gas production is carried out is under pressure with respect to the space where the drying process is carried out as well as to the surrounding atmosphere, and a pressure gas is generated as the working gas.

9. Process as recited in Patent Claim 1, whereas the part of the working gas (20) employed as a heat carrier and circulating gas (13) is heated up to a temperature of 1100°—1250° C required for the water gas reaction

$$C + H_2O \rightarrow CO + H_2$$

by means of the sensible heat of the burned gas (12) circulating in a heat exchanger (41) operating according the principles of parallel-flow, counter-flow or cross-flow.

10. Process as recited in Patent Claim 1, whereas the volatile constituents (17) accumulating in the space where the distillation process is carried out in the first flow (1) is led off to the outside where it is superheated and then fed back into the fuel in the gas generation zone (8).

11. Process is recited in patent Claim 1, whereas the vacuum action of at least a part of the working gas which is fed to the closed circulation system as a heat exchanger is used to inject the volatile component by making use of the ejector principle.

12. Process as recited in patent Claim 1, whereas the gas generation process is ascendingly carried out by directing the flow of the part of the working gas (20) serving as the heat carrier and circulation gas (13) as well as the flow of water vapor (21) in such a way that they flow opposite to the direction of the fuel movement.

13. Process as recited in patent Claim 1, whereas the gas generation is descendingly carried out by directing the flow of the part of the working gas (20) serving as the heat carrier and circulation gas (13) as well as the flow of water vapor (21) in such a way that they flow parallel to the direction of the fuel movement.

14. Process as recited in Patent Claim 1, whereas the gas production process is regulated by

— conducting the part of the working gas (20) serving as the heat carrier and circulation gas (13),

— conducting the water vapor (21),

— and arranging the withdrawal place of the working gas (20) in such a way that the working gas (20), upon leaving the reaction space (3), is again carried through the hottest fuel zone.

15. Process as recited in patent Claims 14, whereas two completely independent fuel zones of the highest temperature are created by distributing or doubly returning the part of the working gas (20) circulating as a heat carrier.

16. Process as recited in Patent Claim 1, whereas the part of the working gas (20) located in the distillation zone (7), which consists predominantly of the volatile constituents of the dry distillation, is circulated in a separate circuit and heated up by the sensible heat of the burned gas (12).

17. Process as recited in Patent Claim 16, whereas part of the circulating gas (13) in the first circuit of the gas production zone (8) is tapped off and used to transport the gases in the distillation zone (7) by making use of the ejector effect.

18. Process as recited in Patent Claim 1, whereas the part of the working gas (20) which serves as a heat carrier and circulation gas (13) in the closed circulation system, is conducted in a first section parallel to and in a second section

counter to the flow direction of the burned gas (12).

19. Process as recited in Patent Claim 1, whereas the sensible heat of the working gas (20) is used for the production of water vapor for the gas generation process.

20. Process as recited in Patent Claim 1, whereas the sensible heat of the burned gas (12) of the second fuel flow (2) is used to warm and liquefy a high-boiling fuel which is added to the fuel of the first flow (1).

21. Process as recited in Patent Claim 1, whereas the sensible heat of the burned gas (12) of the second fuel flow (2) is used to preheat the combustion air (10) for the second fuel flow (2).

22. Process as recited in Patent Claim 1, whereas the fuel for the first flow (1) consists of wood, charcoal, peat, lignite, coal, anthracite, coke, heavy oil, tar, pitch, asphalt or mixtures of these substances, and the fuel for the second flow (2) consists of wood, charcoal, peat, lignite, coal, anthracite, coke or mixtures of these substances, and that tar, pitch and asphalt in liquid form are fed to the gas producing process.

23. Arrangement for the realization of the process as recited in Patent Claim 1, consisting of a means to receive the solid and high-boiling liquid fuels, whereas a centrally-arranged reaction space (3) consisting of a plurality of chambers is provided for the first fuel flow (1) and an oven space (4) jacketing the reaction space (3) is provided for the second fuel flow (2), and that between said reaction space (3) and oven space (4) is provided at least one heat exchanger (41) which conducts the burned gas (12) and the working gas (20) and serves to heat the reaction space (3).

24. Arrangement as recited in patent Claim 23, whereas a water or steam boiler jacket (47) is provided around the reaction space (3) or the oven space (4), a steam superheater is provided, and an air preheater is provided for the combustion air (44) in the second fuel flow (2).

25. Arrangement as recited in Patent Claim 24, whereas the superheater is outfitted with a steam aspirator pump which serves to convey volatile constituents out of the distillation zone (7) of the reaction space (3) and/or convey liquefied, high-boiling fuels into the gas production zone (8) of the reaction space (3).

26. Arrangement as recited in Patent Claim 23, whereas the working gas (20) on one hand and/or the burned gas (12) on the other hand are circulated in the heat exchanger (41) by means of at least one fan each, said fan being driven by an electric motor, an exhaust turbine, an expansion turbine or a steam turbine, or the circulation is provided by a pressure wave machine which makes use of the exhaust energy.

27. Arrangement as recited in Patent Claim 23, whereas gas and/or steam aspiration pumps based on the ejector principle are provided for the gas circulation in the secondary circulation systems.

28. Arrangement as recited in Patent Claim 23, whereas a fan powered by an electric motor, an exhaust turbine or a steam turbine is provided to convey the combustion air (10) for the second fuel flow (2).

**Revendications**

1. Procédé pour la fabrication en continu de gaz de gazogène et de gaz à l'eau haute qualité à partir de combustibles solides et liquides à point d'ébullition élevé sans accumulation externe de chaleur, servant en particulier à faire fonctionner des moteurs à combustion interne à fréquentes variations de couple à fournir, dans lequel sont prévus deux courants de combustible (1, 2) s'écoulant à peu près parallèlement dans la direction du déroulement des processus, caractérisé en ce que le combustible du premier courant (1) est soumis dans un espace de réaction (3) successivement à un processus de séchage et à un processus de dégazage et de gazéification au moins partiel et le combustible du second courant (2) est utilisé pour le chauffage indirect du combustible du premier courant (1), en ce qu'au moins une partie du gaz de travail à produire (20) et au moins une partie du gaz de fumée (12) sont utilisées, chacune dans un circuit fermé, en tant que caloporteur respectivement dans le courant (1) du premier combustible et dans le courant (2) du second combustible et en ce qu'en outre au moins une partie de la vapeur d'eau (15) formée au cours des processus de séchage et de dégazage est ramenée en phase liquide ou gazeuse dans la zone de gazéification (8) du courant (1) du premier combustible.

2. Procédé suivant la revendication 1, caractérisé en ce que tant au cours de la mise en route que durant des périodes de fonctionnement où une puissance relativement élevée est exigée le procédé est mis en oeuvre, au moins dans l'un des courants de combustible (1, 2), avec adjonction d'oxygène pur (18, 19).

3. Procédé suivant la revendication 1, caractérisé en ce que le processus de séchage, d'une part, et le processus de dégazage et de gazéification, d'autre part, du combustible du premier courant (1) se réalisent chacun dans un espace séparé.

4. Procédé suivant la revendication 3, caractérisé en ce que l'espace où se réalise le processus de séchage et l'espace où se produit le processus de dégazage et de gazéification sont soumis à une même pression et en ce que cette pression est au maximum de 1,1 bar.

5. Procédé suivant la revendication 4, caractérisé en ce que la pression est supérieure à 1,1 bar et inférieure à 10 bars.

6. Procédé suivant la revendication 3, caractérisé en ce que l'espace où se réalise le processus de séchage est soumis, par rapport à l'espace où se réalise le processus de dégazage et de gazéification, à un surcroît de pression et

au moins une partie de l'eau évaporée au cours du processus de séchage est à nouveau amenée, en phase gazeuse, au combustible dans la zone de gazéification (8) afin de produire du gaz à l'eau.

7. Procédé suivant la revendication 3, caractérisé en ce que l'eau évaporée dans le processus de séchage est d'abord condensée dans un condenseur, puis est au moins en partie amenée à une chaudière à eau ou à vapeur (47) et ramenée au combustible en vue de la production directe de gaz à l'eau.

8. Procédé suivant la revendication 3, caractérisé en ce que l'espace où se réalise le processus de dégazage et de gazéification est soumis, par rapport à l'espace où se réalise le processus de séchage et à l'atmosphère environnante, à un surcroît de pression et un gaz comprimé est produit en tant que gaz de travail.

9. Procédé suivant la revendication 1, caractérisé en ce que la partie du gaz de travail (20) utilisée en tant que caloporteur et gaz de circulation (13) est portée, par la chaleur sensible du gaz de fumée (12) circulant dans un échangeur de chaleur (41) sur le principe d'écoulement à contre-courant, à courants parallèles ou à courants croisés, à une température de 1100 à 1250° C nécessaire à la réaction du gaz à l'eau

$$C + H_2O \rightarrow CO + H_2$$

10. Procédé suivant la revendication 1, caractérisé en ce que les constituants volatils (17) produits dans l'espace où se réalise le processus de dégazage du combustible du premier courant (1) sont évacués vers l'extérieur, surchauffés et à nouveau amenés au combustible dans la zone de gazéification (8).

11. Procédé suivant la revendication 1, caractérisé en ce que pour l'insufflation des constituants volatils l'effet d'aspiration d'au moins une partie du gaz de travail circulant en tant que caloporteur dans le circuit fermé est utilisé en mettant à profit le principe de l'éjecteur.

12. Procédé suivant la revendication 1, caractérisé en ce que le processus de gazéification s'effectue de haut en bas en dirigeant partie du gaz de travail (20) servant de caloporteur et de gaz de circulation (13) et la vapeur d'eau (21) à contre-courant du sens de mouvement du combustible.

13. Procédé suivant la revendication 1, caractérisé en ce que le processus de gazéification s'effectue de haut en bas en diregeant la partie du gaz de travail (20) servant de caloporteur et de gaz de circulation (13) et la vapeur d'eau (21) dans le même sens que celui de mouvement du combustible.

14. Procédé suivant la revendication 1, caractérisé en ce que par un guidage approprié de l'écoulement de la partie du gaz de travail (20) servant de caloporteur et de gaz de circulation (13) ainsi que de l'écoulement de la vapeur d'eau (21) et une disposition convenable du point de prélèvement du gaz de travail (20) le processus de gazéification se trouve conduit de telle manière que le gaz de travail (20), en quittant l'espace de réaction (3), pase encore une fois par la zone à combustible la plus chaude.

15. Procédé suivant la revendication 14, caractérisé en ce que par répartition ou double renvoi de la partie du gaz de travail (20) circulant en tant que caloporteur deux zones à combustible, indépendantes l'une de l'autre, portées à une très haute température sont formées dans la zone de gazéification.

16. Procédé suivant la revendication 1, caractérisé en ce qu'une partie, à savoir celle se trouvant dans la zone de dégazage (7), du gaz de travail (20) contenant principalement les constituants volatils de la distillation sèche est amenée à circuler dans un circuit séparé et est chauffée par la chaleur sensible du gaz de fumée (12).

17. Procédé suivant la revendication 16, caractérisé en ce que, après avoir été déviée, une partie du gaz de circulation (13) du premier circuit de la zone de gazéification (8) est utilisée, en mettant à profit l'effet d'éjecteur, pour le transport du gaz de la zone de dégazage (7).

18. Procédé suivant la revendication 1, caractérisé en ce que la partie du gaz de travail (20) utilisée dans le circuit fermé caloporteur et gaz de circulation (13) est dirigée, dans une première zone, dans le même sens que le gaz de fumée (12) et, dans une seconde zone, à contre-courant de celui-ci.

19. Procédé suivant la revendication 1, caractérisé en ce que la chaleur sensible du gaz de travail (20) est utilisée afin de produire de la vapeur d'eau pour le processus de gazéification.

20. Procédé suivant la revendication 1, caractérisé en ce que la chaleur sensible du gaz de fumée (12) du combustible du second courant (2) est utilisée pour le chauffage et la liquéfaction d'un combustible additionnel à point d'ébullition élevé du premier courant (1).

21. Procédé suivant la revendication 1, caractérisé en ce que la chaleur sensible du gaz de fumée (12) du combustible du second courant (2) est utilisée afin de préchauffer l'air de combustion (10) pour le second courant de combustible (2).

22. Procédé suivant la revendication 1, caractérisé en ce que la combustible du premier courant (1) est constitué par du bois, du charbon de bois, de la tourbe, du lignite, de la houille, de l'anthracite, du coke, de l'huile lourde, du goudron, du brai, de l'asphalte ou des mélanges de ces substances et le combustible du second courant (2) est constitué par du bois, du charbon de bois, de la tourbe, du lignite, de la houille, de l'anthracite, du coke ou des mélanges de ces substances et en ce que du goudron, du brai et de l'asphalte sont amenés en phase liquide au processus de gazéification.

23. Dispositif pour la mise en oeuvre du procédé suivant la revendication 1, constitué par des moyens pour recevoir les combustibles solides et liquides à point d'ébullition élevé, caractérisé en ce qu'il est prévu pour le premier courant de combustible (1) un espace de réaction (3) disposé centralement et constitué par plusieurs chambres et pour le second courant de combustible (2) un espace formant four (4) entourant l'espace de réaction (3) sous la forme d'une enveloppe et, entre ces espaces, au moins un échangeur de chaleur (41) véhiculant le gaz de fumée (12) et le gaz de travail (20) et destiné à chauffer l'espace de réaction (3).

24. Dispositif suivant la revendication 23, caractérisé en ce qu'il est prévu une chaudière à eau ou à vapeur (47) entourant sous forme d'enveloppe l'espace de réaction (3) ou l'espace formant four (4) et un surchauffeur de vapeur ainsi que, dans le second courant de combustible (2), un préchauffeur d'air pour l'air de combustion (44).

25. Dispositif suivant la revendication 24, caractérisé en ce que le surchauffeur est équipé d'une pompe à jet de vapeur qui sert à refouler des constituants volatils hors de la zone de dégazage (7) de l'espace de réaction (3) et/ou des combustibles liquéfiés à point d'ébullition élevé dans la zone de gazéification (8), de l'espace de réaction (3).

26. Dispositif suivant la revendication 23, caractérisé en ce que pour faire circuler le gaz de travail (20), d'une part, et/ou le gaz de fumée (12), d'autre part, dans l'échangeur de chaleur (41) il est prévu soit au moins respectivement une soufflante entraînée par un moteur électrique, une turbine à gaz d'échappement, une turbine de détente ou une turbine à vapeur, soit une machine à ondes de pression utilisant l'énergie des gaz d'échappement.

27. Dispositif suivant la revendication 23, caractérisé en ce que pour la circulation des gaz dans les circuits secondaires sont prévues des pompes à jet de gaz et/ou à jet de vapeur fondées sur la principe de l'éjecteur.

28. Dispositif suivant la revendication 23, caractérisé en ce que dans le second courant de combustible (2) est prévue pour le refoulement de l'air du combustion (10) une soufflante entraînée par un moteur électrique, une turbine à gaz d'échappement, une turbine de détente ou une turbine à vapeur.

Fig. 1

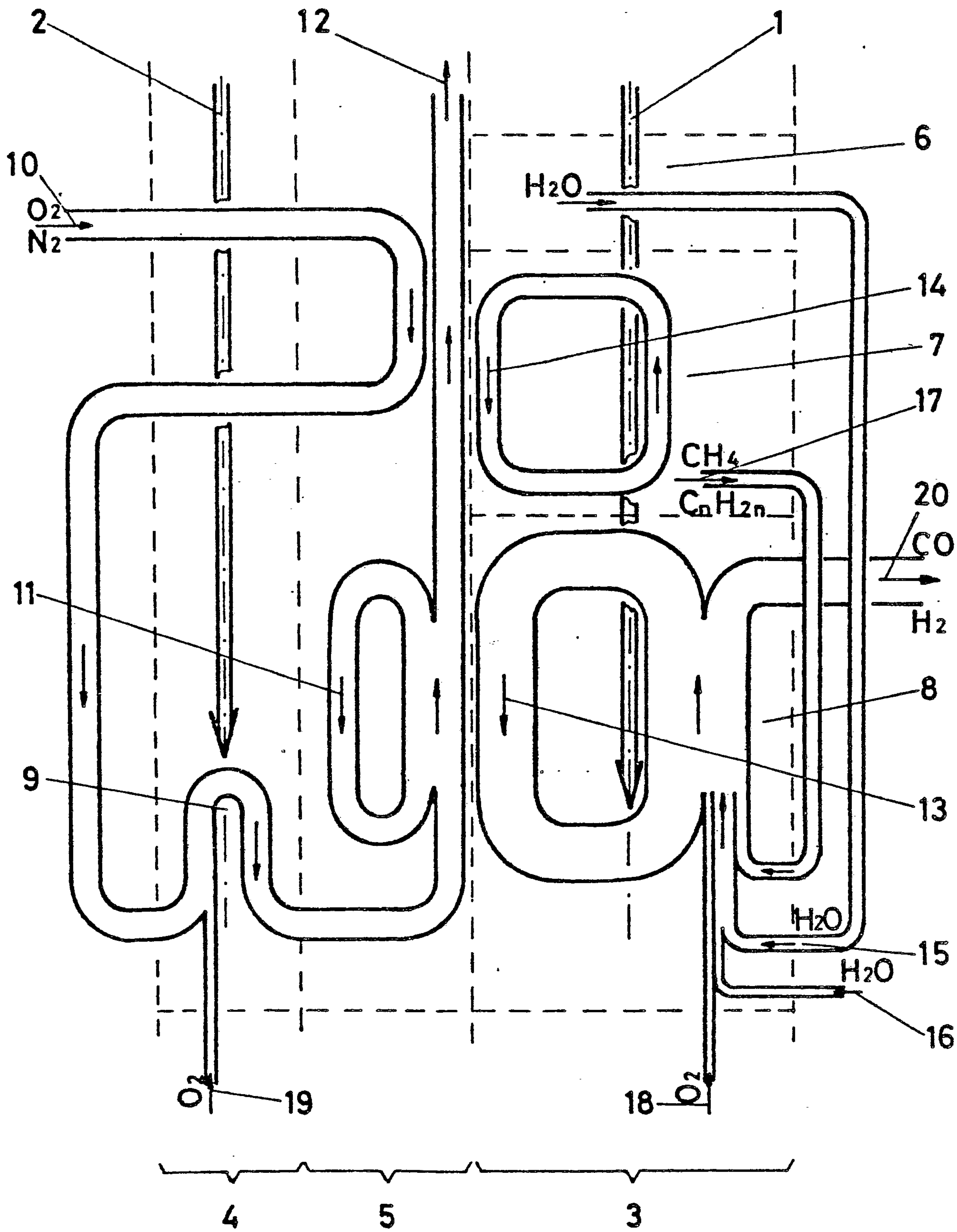
2
12
1
10
$O_2$
$N_2$
6
$H_2O$
14
7
17
$CH_4$
$C_nH_{2n}$
20
CO
$H_2$
11
8
9
13
$H_2O$
15
$H_2O$
16
$O_2$
19
18
$O_2$
4
5
3

Fig. 2

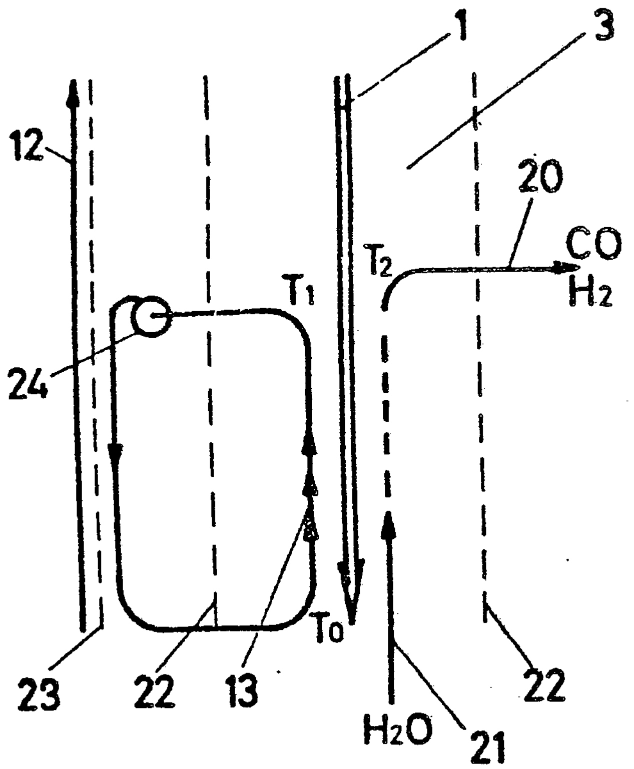


Fig. 3

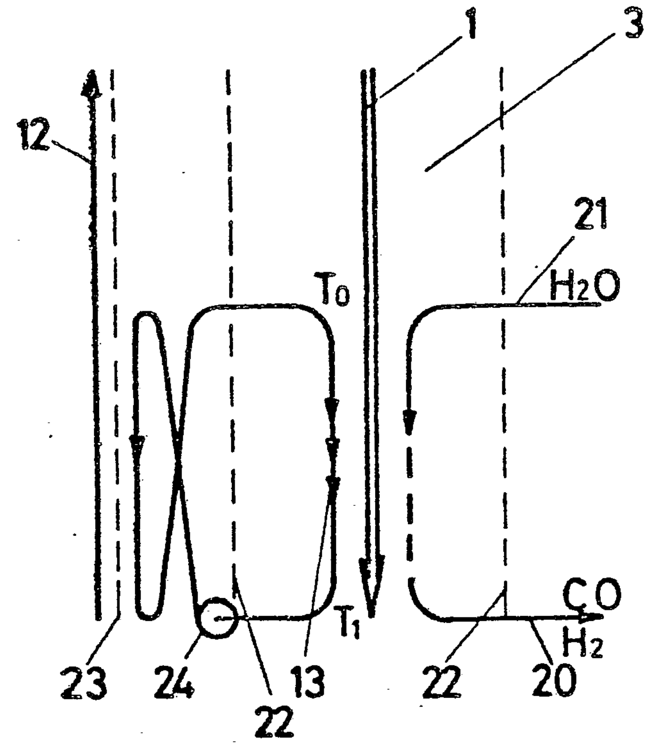


Fig. 4

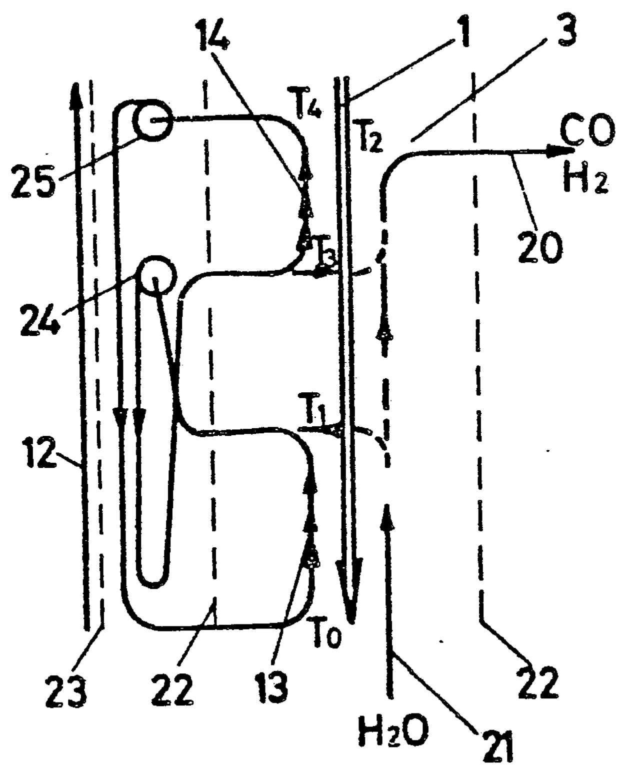


Fig. 5

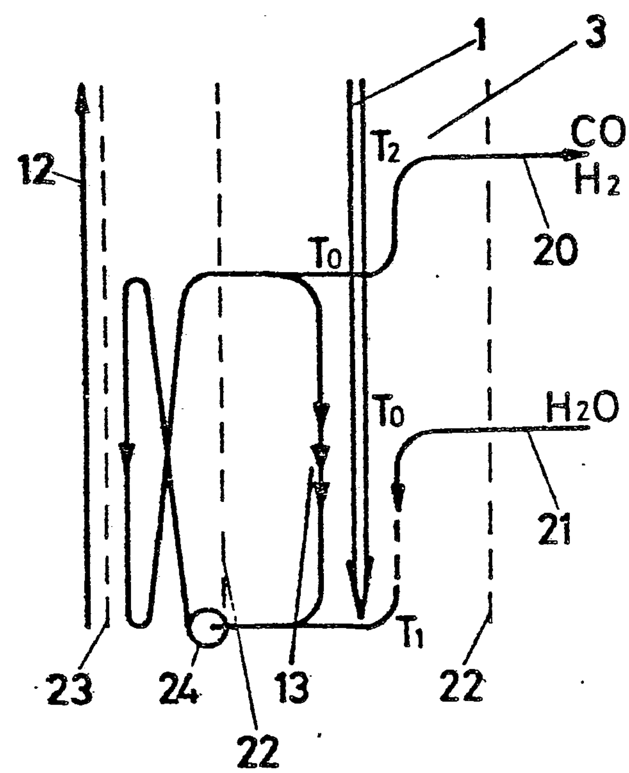

Fig. 6

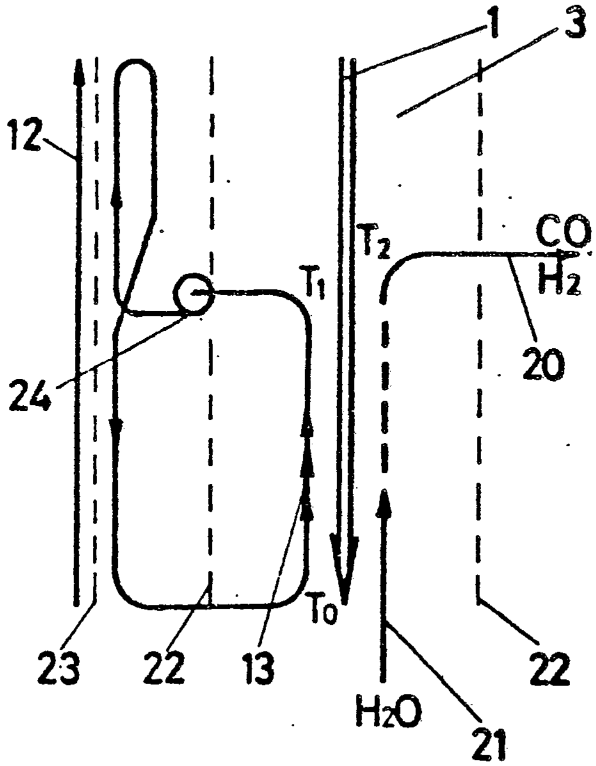


Fig. 7

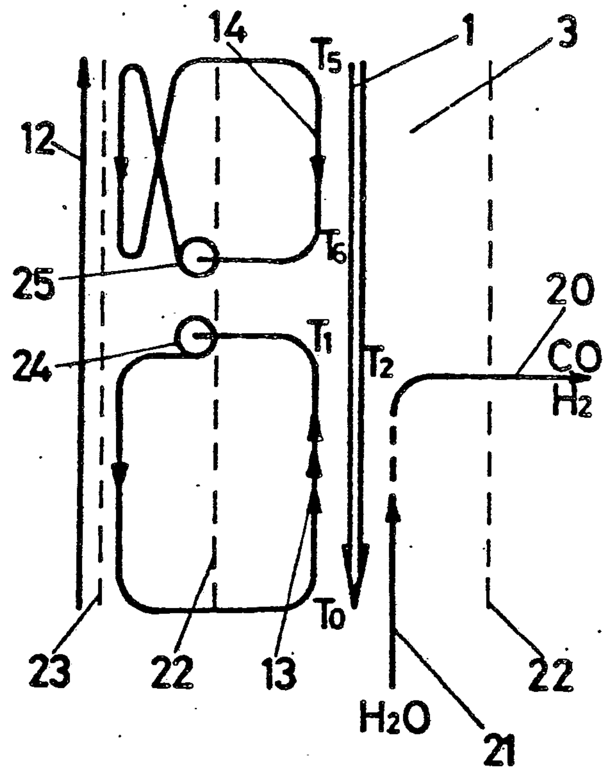


Fig. 8

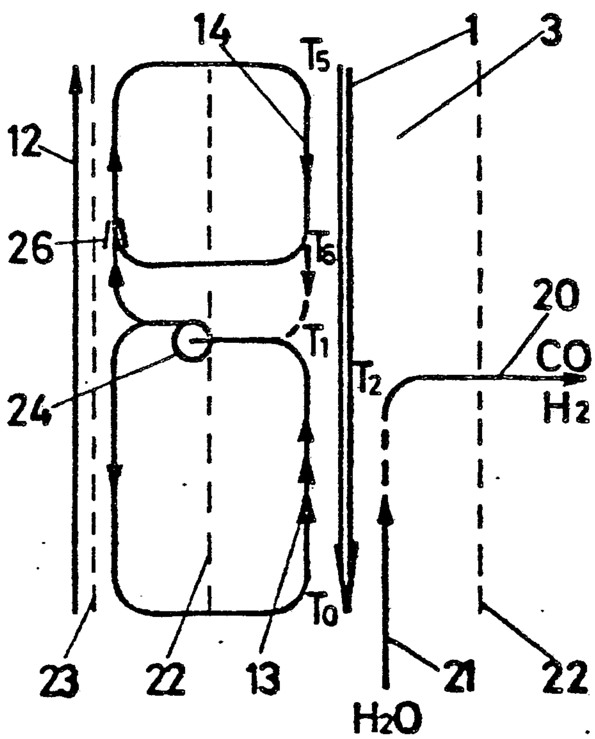

Fig. 9

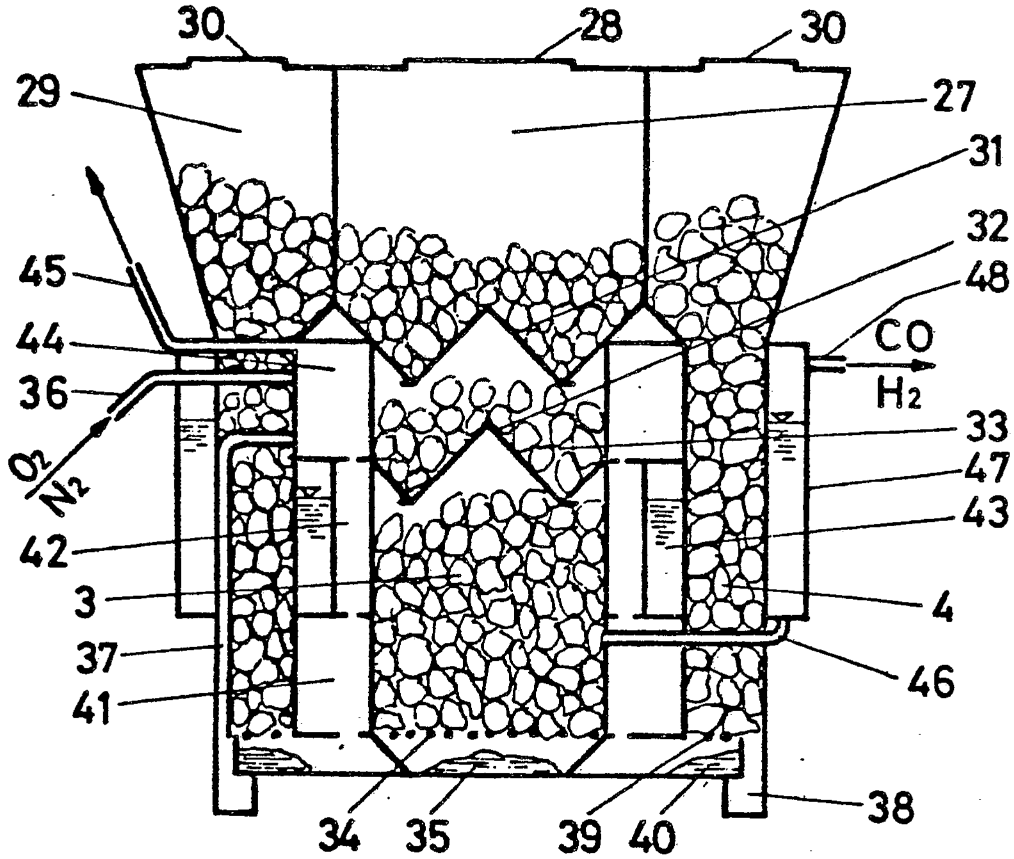
30
28
30
29
27
31
32
48
45
44
CO
$H_2$
36
$O_2$
$N_2$
33
47
42
43
3
4
37
46
41
38
34
35
39
40

Fig. 10

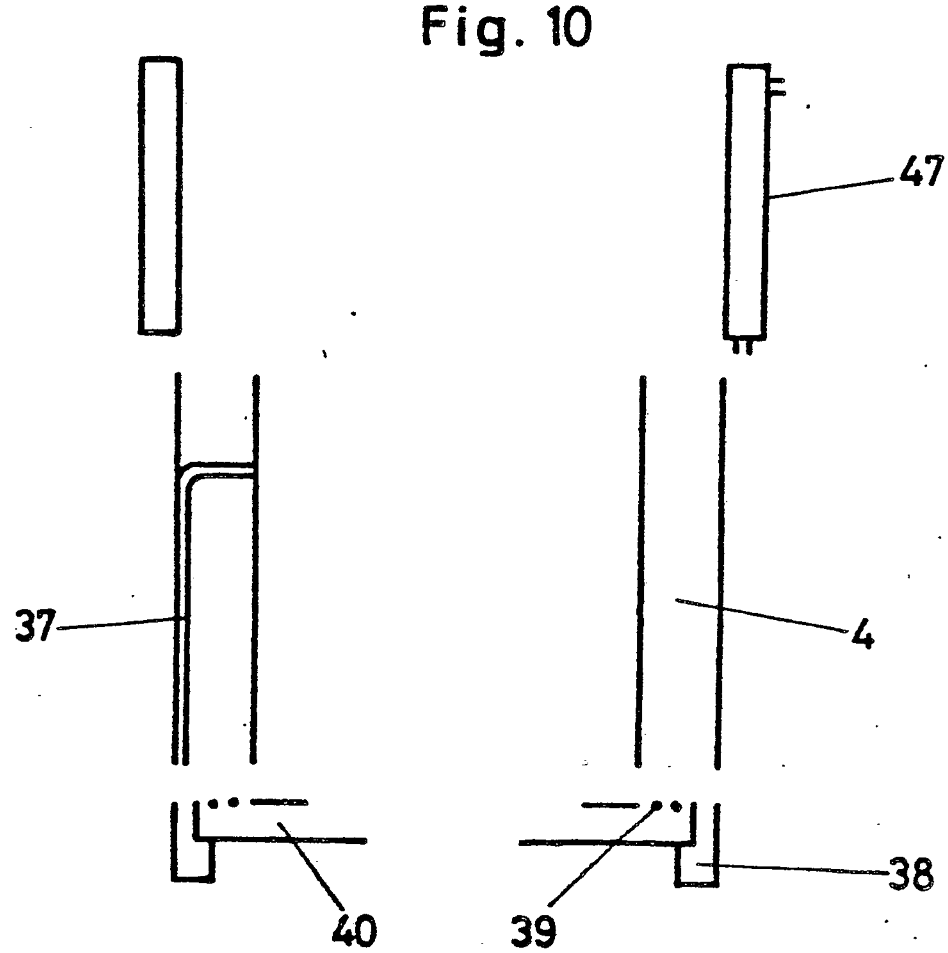
47
37
4
38
40
39

Fig. 11

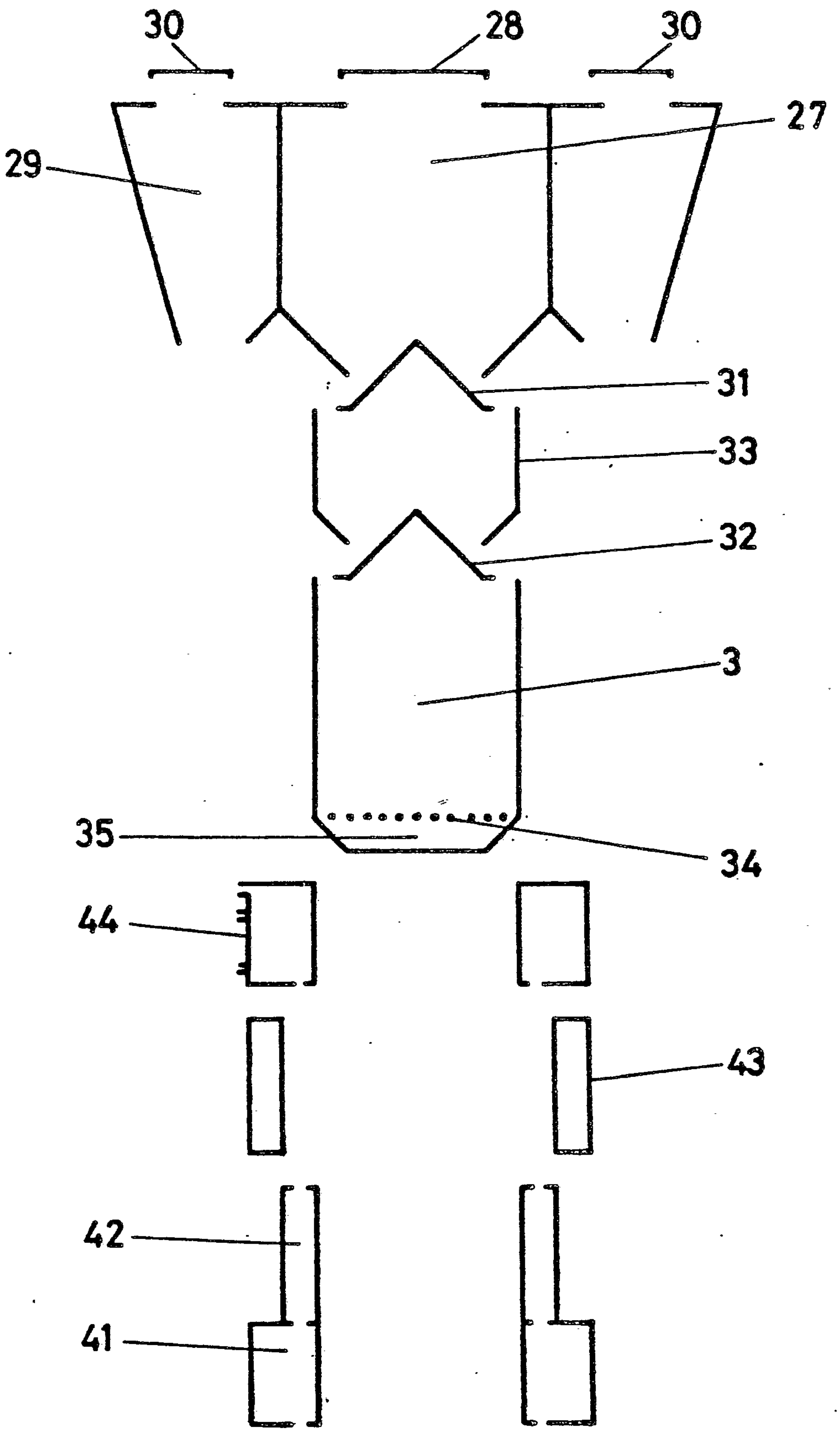

Fig. 12

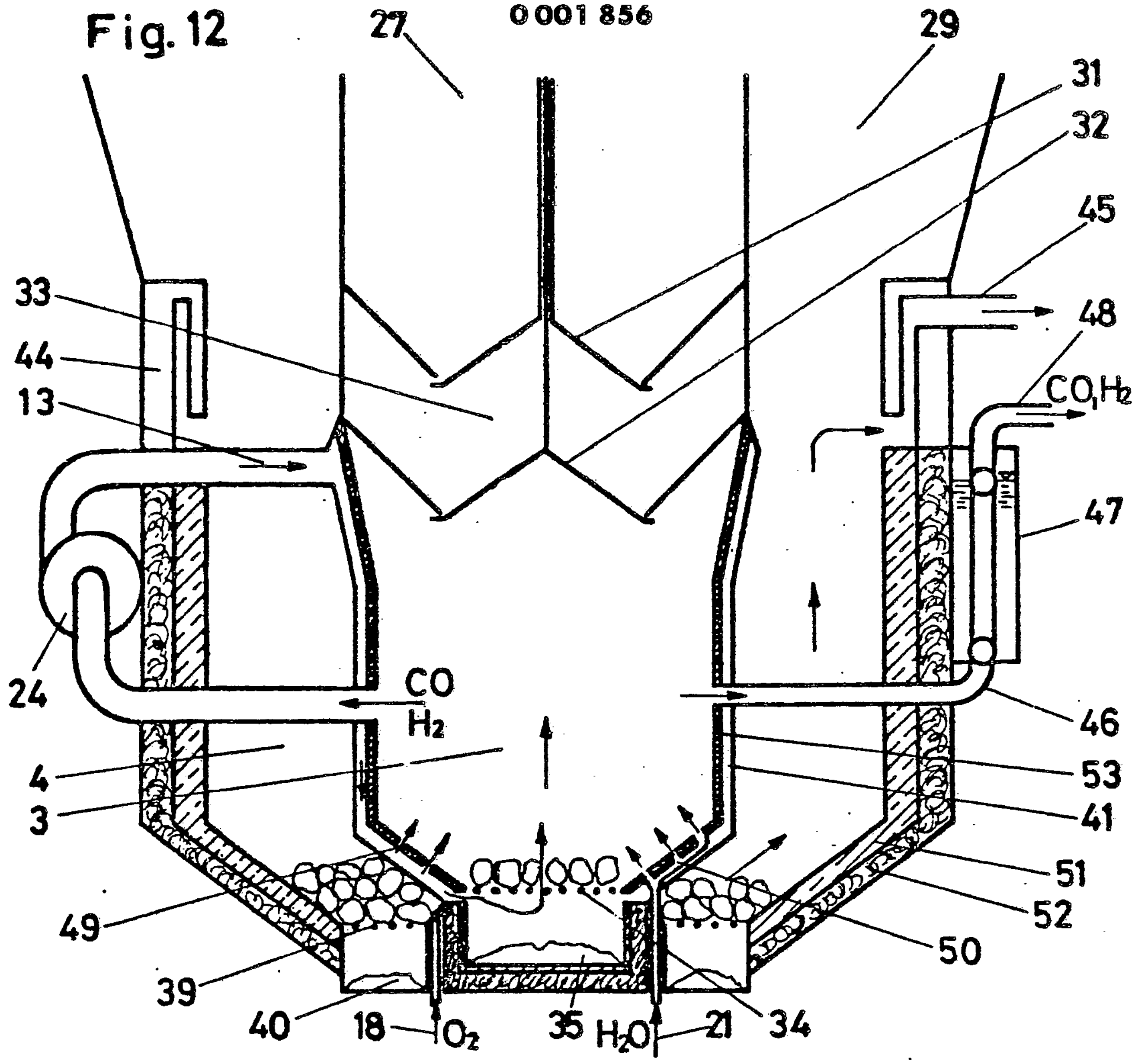
27
29
31
32
45
48
33
44
13
CO,H2
47
24
CO
H2
46
4
53
3
41
51
49
52
50
39
40
18
O2
35
H2O
21
34

Fig. 13

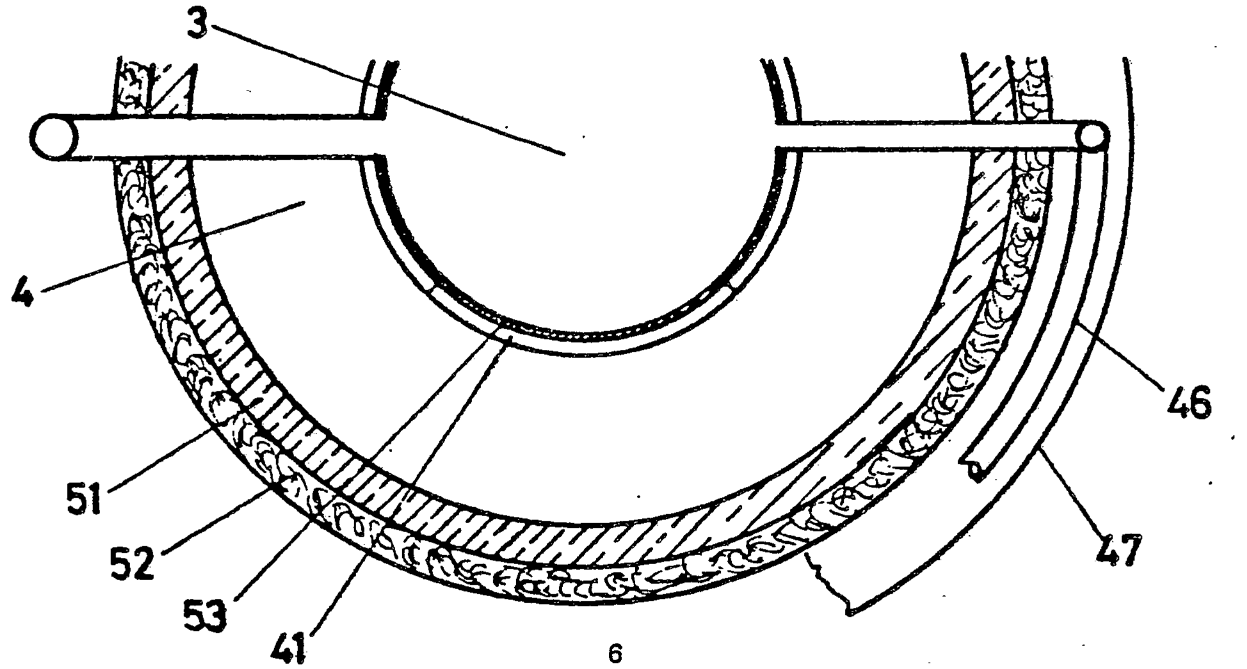
3
4
46
51
52
47
53
41

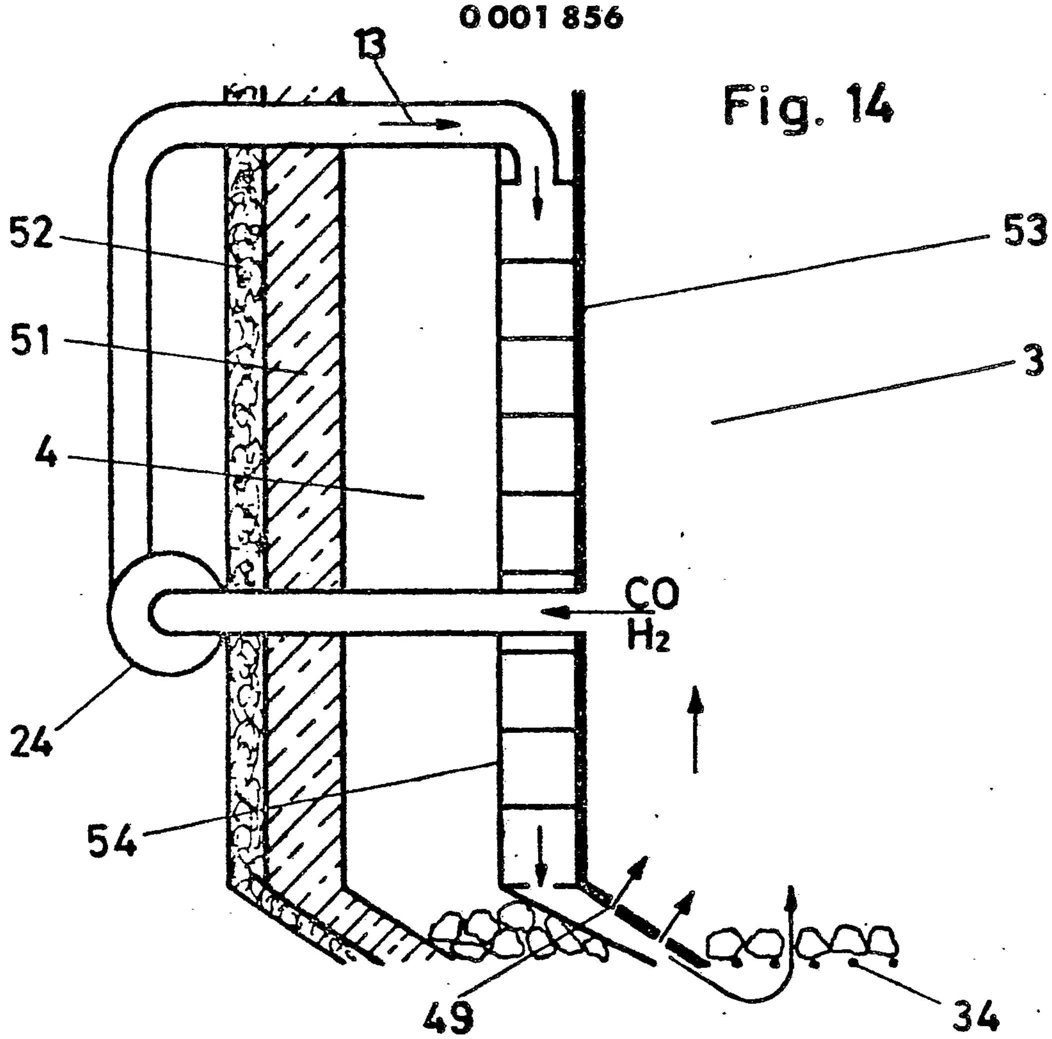


Fig. 14

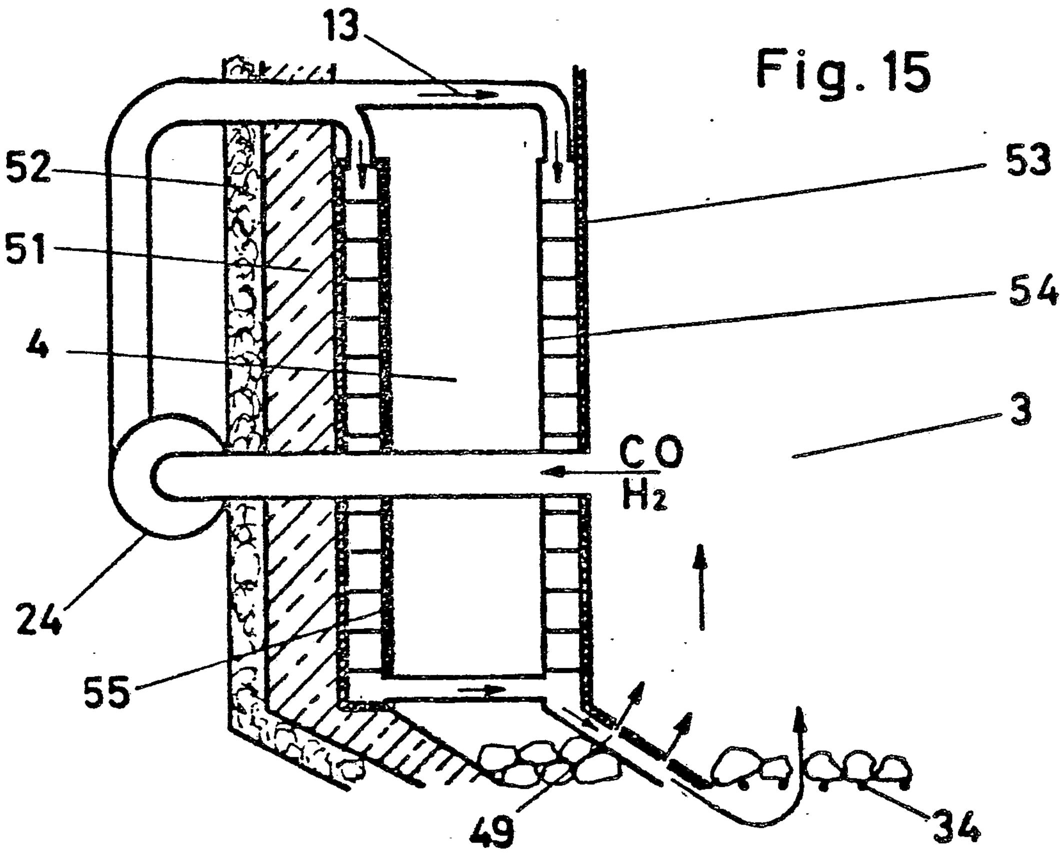


Fig. 15

Fig. 16

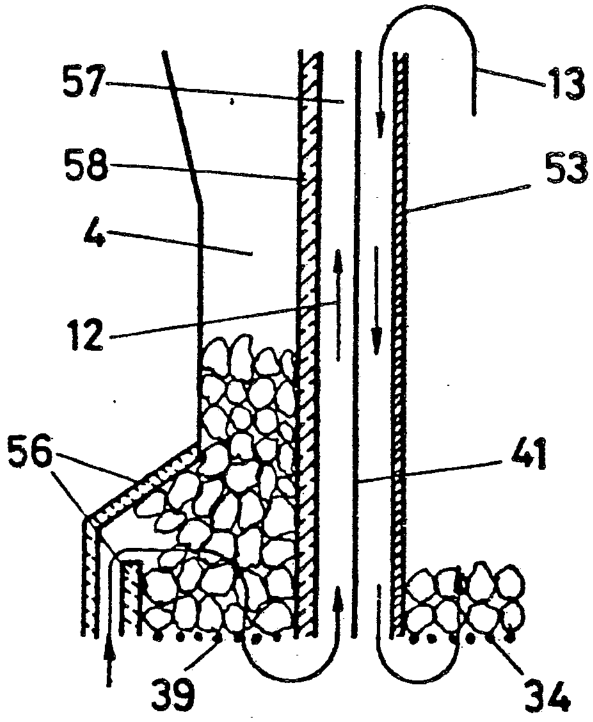


Fig. 17

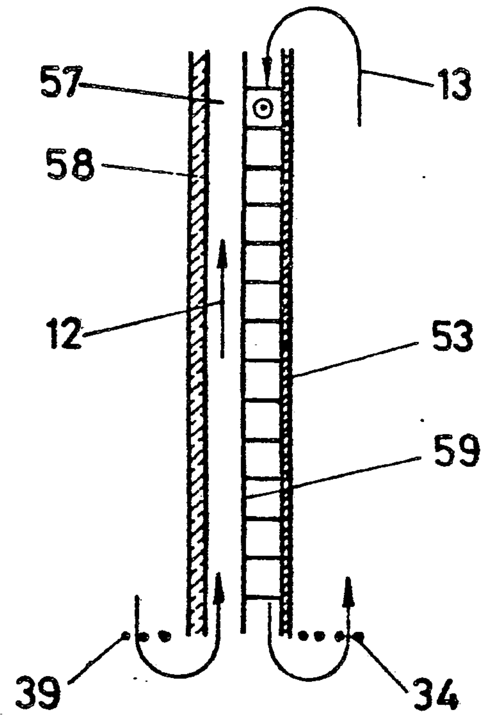


Fig. 18

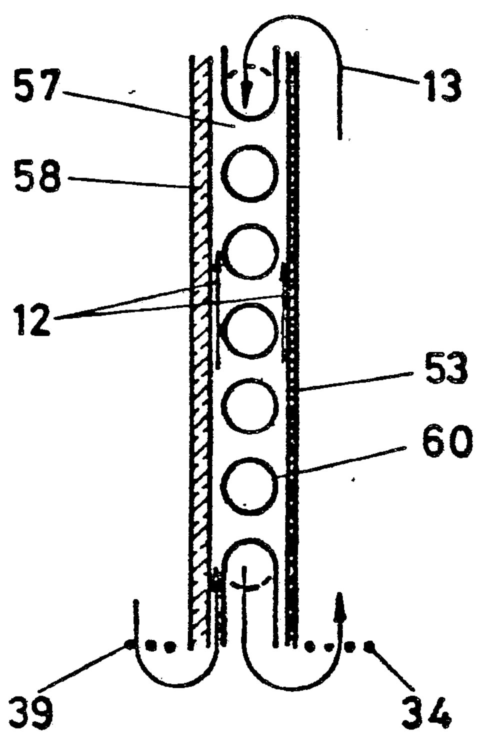


Fig. 19

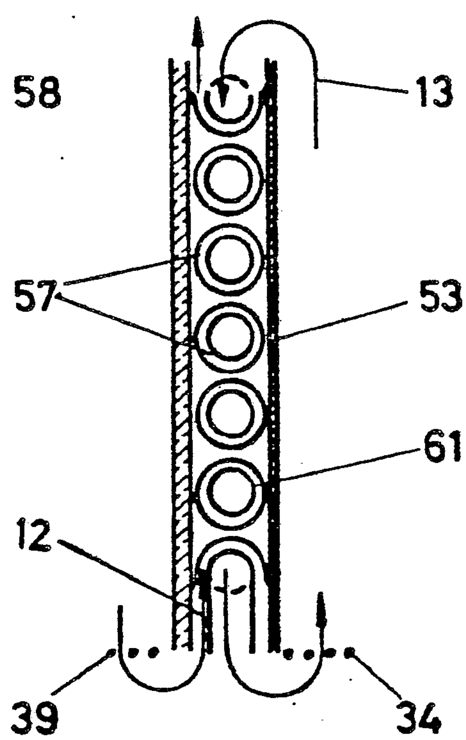

Fig. 20

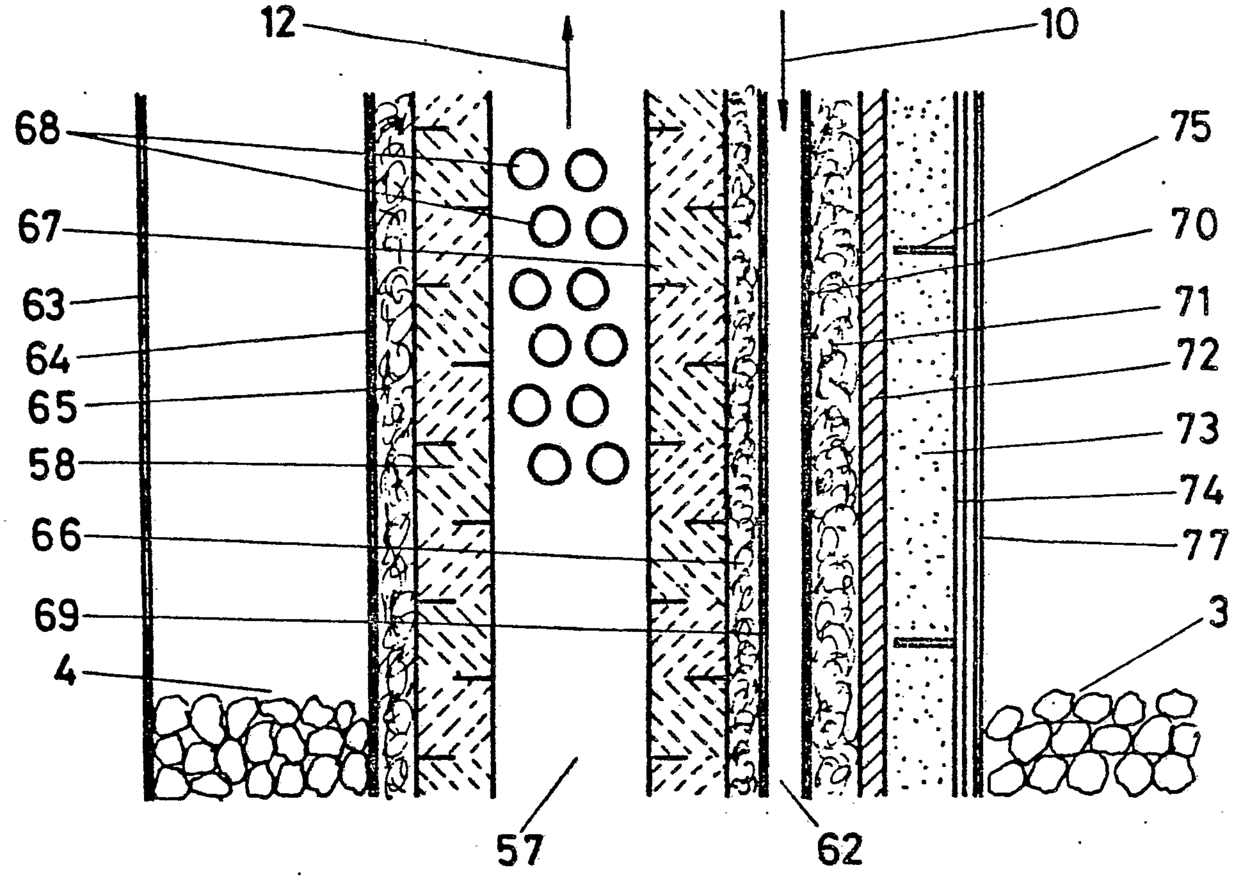
12
10
68
67
63
64
65
58
66
69
4
75
70
71
72
73
74
77
3
57
62

Fig. 21

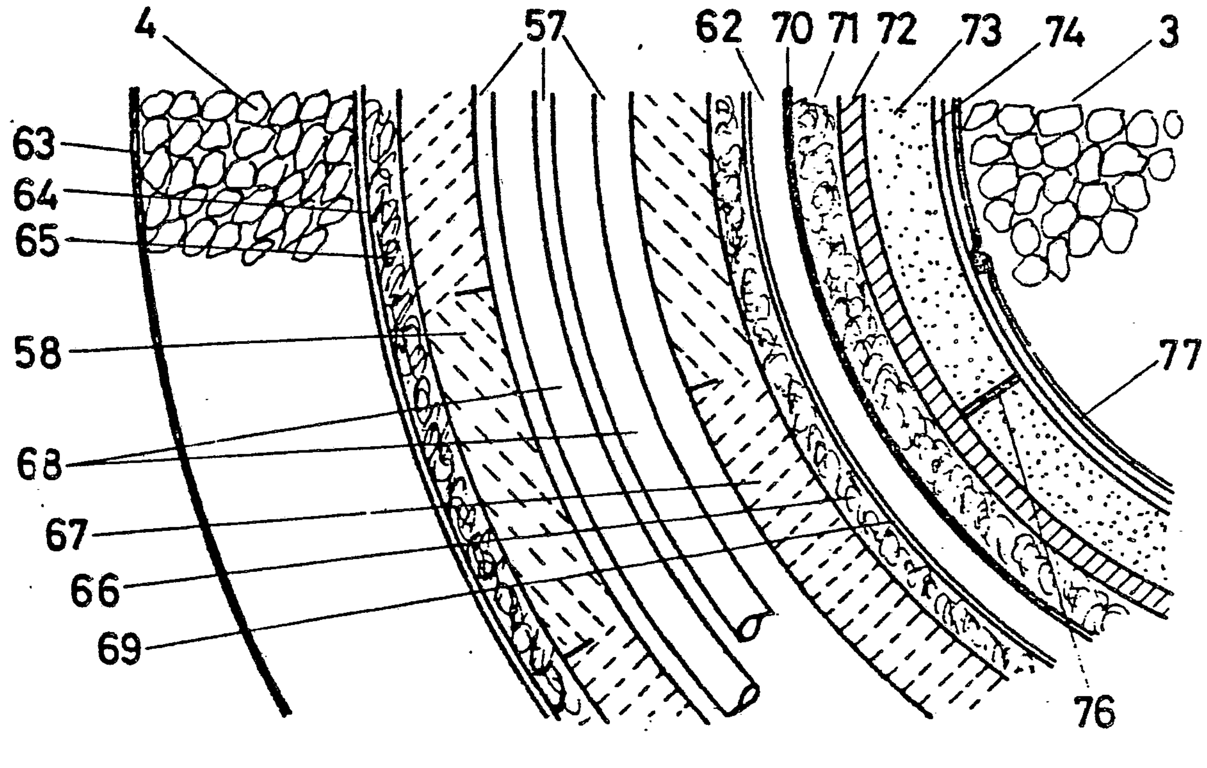
4
57
62
70
71
72
73
74
3
63
64
65
58
68
67
66
69
77
76

Fig. 22

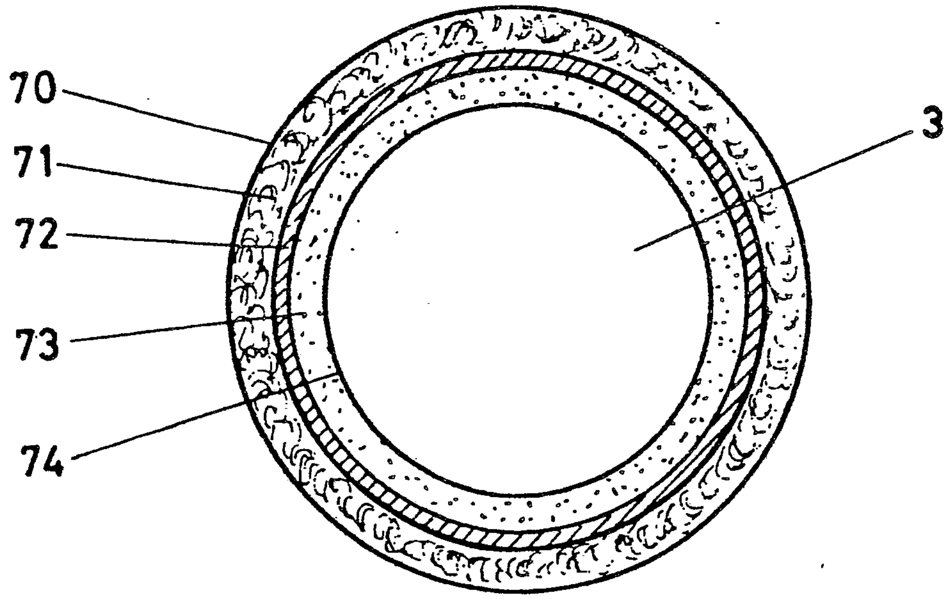


Fig. 23